# EUROPÄISCHE PATENTSCHRIFT

(11) **EP 0 801 728 B1**
(45) Veröffentlichungstag und Bekanntmachung des Hinweises auf die Patenterteilung: **08.08.2001**
(21) Anmeldenummer: 95915745.4
(22) Anmeldetag: 05.04.1995
(51) Int. Cl.: G01L 5/10, B65H 59/38

(54) **MESSFÜHLER UND VERFAHREN ZUR BESTIMMUNG VON ZUGSPANNUNGEN BEI EINEM LANGGESTRECKTEN GUT**
MEASURING PROBE AND PROCESS FOR DETERMINING TENSILE STRESSES IN AN ELONGATED PRODUCT
SONDE ET PROCEDE DE DETERMINATION DE CONTRAINTES DE TRACTION DANS UN PRODUIT TRES ALLONGE

(30) Priorität: 02.09.1994 DE 4431333; 20.03.1995 DE 19510039
(43) Veröffentlichungstag der Anmeldung: 22.10.1997
(73) Patentinhaber: SIEMENS AKTIENGESELLSCHAFT, 80333 München (DE)
(72) Erfinder: SCHNEIDER, Reiner, D-96237 Ebersdorf (DE); MÜLLER, Thomas, D-96515 Sonneberg (DE); KNOCH, Horst, D-96450 Coburg (DE); LOCZENSKI, Martin, D-96465 Neustadt (DE); LUTHARDT, Reiner, D-96515 Sonneberg (DE); KESSEL, Günther, D-96472 Rödental (DE)
(74) Vertreter: Epping, Wilhelm, Dipl.-Ing.
(86) Internationale Anmeldenummer: DE9500460
(87) Internationale Veröffentlichungsnummer: WO9607878

(56) Entgegenhaltungen:
- EP-A- 0 459 322
- DE-C- 4 217 092

## Beschreibung

Wickeleinrichtung sowie Verfahren zum Bewickeln eines Verarbeitungprodukts der Kabeltechnik.

Die Erfindung betrifft Wickeleinrichtung zum Bewickeln eines in axiale Abzugsrichtung durchlaufenden, langgestreckten Verarbeitungsprodukts der Kabeltechnik mit einem oder mehr als einem langgestreckten Gut unter einer vorgebbaren Zugspannung, die eine Vorratsspule für das jeweilige, langgestreckte Gut, mindestens einen Meßfühler zur Bestimmung von Zugspannungen des jeweiligen, langgestreckten Gutes auf dessem Weg von der Vorratsspule zum Verarbeitungsprodukt, sowie eine Auswerte-/Steuereinrichtung aufweist, die dem Meßfühler zugeordnet ist.

Eine Wickeleinrichtung dieser Art ist aus der DE 42 17 092 C1 bekannt. Sie ist als Zentralwendelwickler aufgebaut. Um ihre Zentralachse ist ein inneres Tragelement mit einer Vorratsspule sowie außen konzentrisch dazu ein Tragelement mit einem Korb (Flyer) angeordnet. Mit Hilfe des Flyers wird ein langgestrecktes Gut von der Vorratsspule abgezogen und auf eine Kabelseele gewickelt, die durch das innere Tragelement hindurchgeführt wird. Zur Bestimmung der Zugspannung des langgestreckten Gutes ist außen am äußeren Tragelement des Korbes (Flyers) ein Meßfühler angebracht, der mit dem Korb um die Zentralachse rotiert. Er ist in der Art eines Biegebalkens ausgebildet, der sich vom äußeren Tragelement weg in radialer Richtung nach außen erstreckt. An seinem, der Zentralachse abgewandtem Ende weist er eine Öse auf, durch die lediglich allein das langgestreckte Gut auf seinem Weg von seiner Vorratsspule zur Kabelseele hindurchgeführt wird. Der Meßfühler ist derart aufgehängt, daß er aus seiner radialen Richtung zumindest nach einer Seite axial auslenkbar ist. Zur Messung seiner Zugspannung wird das langgestreckte Gut durch die Öse des Meßfühlers im wesentlichen parallel zur Zentralachse hindurchgeführt, in Gegenrichtung umgelenkt und dann erst letztlich der Kabelseele zugeführt. Auf einen derartig aufgehängten und ausgebildeten Meßfühler können unter bestimmten praktischen Gegebenheiten insbesondere Störgrößen, wie z.B. Fliehkräfte, Unwuchten, Reibkräfte, zusätzlich wirksam werden und dadurch gegebenenfalls das Meßergebnis für die Zugspannung des langgestreckten Gutes zu sehr verfälschen.

Aus der DE 35 25 022 A1 ist ein Zentralwendelspinner für die Kabeltechnik bekannt, bei dem ein band- oder fadenförmiges Spinnmaterial von einer rotierenden Vorratsspule mit Hilfe eines rotierenden Flyers abgeschlagen und auf eine Kabelseele gewickelt wird. Dieses Spinnmaterial allein wird über eine mit dem Flyer fest verbundene Tänzereinrichtung geführt, die im äußeren Bereich des rotierenden Flyers entlang der Rotationsachse der Vorratsspule angeordnet ist. Die Arbeitsposition der Tänzereinrichtung hängt dabei von der Zugspannung des Spinnmaterials ab und wird zur Regelung der Spulengeschwindigkeit abgefragt. Bei der Rotation einer derartigen Tänzereinrichtung können z.B. Zentrifugalkräfte auf deren Funktionsteile einwirken und das Meßergebnis für die Zugspannung verfälschen, mit der das band- oder fadenförmige Material von der rotierenden Vorratsspule abgezogen wird. Es besteht somit insbesondere z.B. bei größeren Rotationsgeschwindigkeiten die Gefahr, daß es unter Umständen zu einer Überbeanspruchung oder sogar zu einem Abriß des langgestreckten Gutes kommt, da eine vorgegebene Zugsspannung für das verwendete Material nicht genügend genau eingehalten werden kann.

Aus der EP 0 459 322 A1 ist auf dem Fachgebiet der Webmaschinentechnik ein Meßinstrument zur Bestimmung von Zugspannungen in einem Faden bekannt, welcher einer Webmaschine zugeführt wird. Dabei wird lediglich dieser eine Faden allein durch eine Öse hindurchgeführt, die an einer in axialer Abzugsrichtung deformierbaren Platte aufgehängt ist. Je nach Fadenzugspannung wird diese Platte in axialer Fadenabzugsrichtung deformiert.

Der Erfindung liegt die Aufgabe zugrunde, eine Wickeleinrichtung für die Kabeltechnik bereitzustellen, mit der in einfacher Weise auf ein Verarbeitungsprodukt der Kabeltechnik mindestens ein langgestrecktes Gut mit einer präzise kontrollierbaren Zugspannung aufgebracht werden kann.

Gemäß der Erfindung wird dieses Aufgabe bei einer Wickeleinrichtung der eingangs genannten Art dadurch gelöst, daß der Meßfühler derart als Meßring ausgebildet und bezüglich des in axiale Abzugsrichtung abgezogenen, zu bewickelnden Verarbeitungsprodukts angeordnet ist, daß er das Verarbeitungsprodukt und das langgestreckte Gut gemeinsam ringförmig so umgibt, daß das langgestreckte Gut am Innenrand dieses Meßrings ringsum entlangläuft und dabei das Verarbeitungsprodukt mit umläuft.

Dadurch ist weitgehend vermieden, daß Störgrößen, wie z.B. Reibkräfte, Fliehkräfte, Unwuchten, usw., auf den Meßfühler und/oder auf das langgestreckte Gut selbst beim Durchlaufen des Meßfühlers in unzulässiger Weise einwirken können. Somit kann die tatsächliche Zugspannung des jeweiligen, langgestreckten Guts mit Filfe des Meßfühlers weitgehend unverfälscht, d.h. einwandfrei gemessen werden. Gleichzeitig genügt hierfür bereits eine einfache Wegführung für das Verarbeitungsprodukt sowie für das jeweilige, langgestreckte Gut. Auf diese Weise ist es somit ermöglicht, das jeweilige langgestreckte Gut in zuverlässiger Weise, d.h. mit einer präzise kontrollierbaren Zugspannung, auf das Verarbeitungsprodukt aufzubringen.

Gemäß einer zweckmäßigen Weiterbildung der Erfindung ist der Meßfühler in axialer Abzugsrichtung des Verarbeitungsprodukt betrachtet unmittelbar vor dem Verseilnippel angeordnet. Dadurch können bei der Bestimmung der Zugspannung für das langgestreckte Gut in vorteilhafter Weise auch Zugkräfte mitberücksichtigt werden, die am langgestreckten Gut erst während seines Weg von der Vorratsspule bis zum Auflaufen auf dem Verarbeitungsprodukt zusätzlich wirksam werden. Auf diese Weise ist weitgehend sichergestellt, daß die tatsächliche Zugspannungskraft des langgestreckten Gutes unmittelbar vor seinem Aufbringen auf das Verarbeitungsprodukt im wesentlichen fehlerfrei,d.h. möglichst exakt, gemessen werden kann. Es ist somit weitgehend vermieden, daß das langgestreckte Gut mit weiteren, nicht mitgemessenen Zusatzkräften wie z.B. zusätzlichen Reib- oder Fliehkräften beaufschlagt auf das Verarbeitungsprodukt aufläuft.

Gemäß einer weiteren, zweckmäßigen Weiterbildung der Erfindung ist der Meßfühler entlang der axialen Abzugsrichtung des Verarbeitungsprodukts verschiebbar gelagert oder auslenkbar. Dadurch können äußere Störgrößen, wie z.B. Unwuchten oder Fliehkräfte, weit weniger störend auf den Meßfühler wirksam werden und damit weit weniger in die Messung der Zugspannung des langgestreckten Gutes eingehen. Es ergibt sich insbesondere eine dynamisch verbesserte, d.h. weitgehend verzögerungsarme Messung der Zugspannung des langgestreckten Gutes, die unter einer Vielzahl praktischer Gegebenheiten in einfacher Weise eine weitgehend genaue Bestimmung der Zugspannung ermöglicht.

Die Erfindung betrifft auch ein Verfahren zum Bewickeln eines langgestreckten Verarbeitungsprodukts der Kabeltechnik mit einem oder mehr als einem langgestreckten Gut unter einer vorgebbaren Zugspannung mit Hilfe einer erfindungsgemäßen Wickelvorrichtung, welches dadurch gekennzeichnet ist, daß das in axiale Abzugsrichtung abgezogene Verarbeitungsprodukt und das jeweilige langgestreckte Gut gemeinsam durch den Meßfühler hindurchgeführt werden, der sie als Meßring ringförmig umgibt, und daß das Verarbeitungsprodukt vom langgestreckten Gut ringsum umlaufen wird, wobei das langgestreckte Gut am Innenrand dieses Meßrings entlangläuft.

Sonstige Weiterbildungen der Erfindung sind in den abhängigen Ansprüchen wiedergegeben.

Die Erfindung und ihre Weiterbildungen werden nachfolgend anhand von Zeichnungen naher erläutert.

Es zeigen:
- Figur 1: schematisch im Querschnitt einen erfindungsgemäßen Meßfühler bei einer SZ-Drahtspeicher-Verseilmaschine in der Kabeltechnik,
- Figur 2: schematisch in vergrößerter Darstellung den Meßfühler nach Figur 1,
- Figur 3: ein Kräftediagramm für den Meßfühler nach den Figuren 1 und 2,
- Figur 4: schematisch im Querschnitt einen erfindungsgemäßen Meßfühler zur Messung der Zugspannung eines langgestreckten Gutes,
- Figur 5: schematisch im Querschnitt eine erste Abwandlung des erfindungsgemäßen Meßfühlers nach Figur 4,
- Figur 6: schematisch im Querschnitt eine weitere Abwandlung des erfindungsgemäßen Meßfühlers nach Figur 4,
- Figur 7: den Meßfühler nach Figur 6 in einer Schnittbildebene senkrecht zur Zeichenebene von Figur 6,
- Figur 8 mit 15: Wickeleinrichtungen in der Kabeltechnik für einer erfindungsgemäßen Vorrichtung zur Messung der Zugspannung eines langgestreckten Gutes gemäß den Figur 4 mit 7.
- Figur 16: den Aufbau und die Anordnung eines gemäß der Erfindung ausgestalteten Meßfühlers im Rahmen einer Verseileinrichtung,
- Figur 17: in schematischer Darstellung vergrößert Einzelheiten des Aufbaus eines Meßfühlers nach der Erfindung,
- Figur 18: ein Kräfteparallelogramm zur Erläuterung der bei dem langgestreckten Gut auftretenden Kräfteverhältnisse,
- Figur 19: eine weitere Verseileinrichtung mit zweifacher Aufbringung des langgestreckten Gutes und

- Figur 20: in vergrößerter Darstellung Einzelheiten im Bereich des Meßfühlers nach Figur 4.

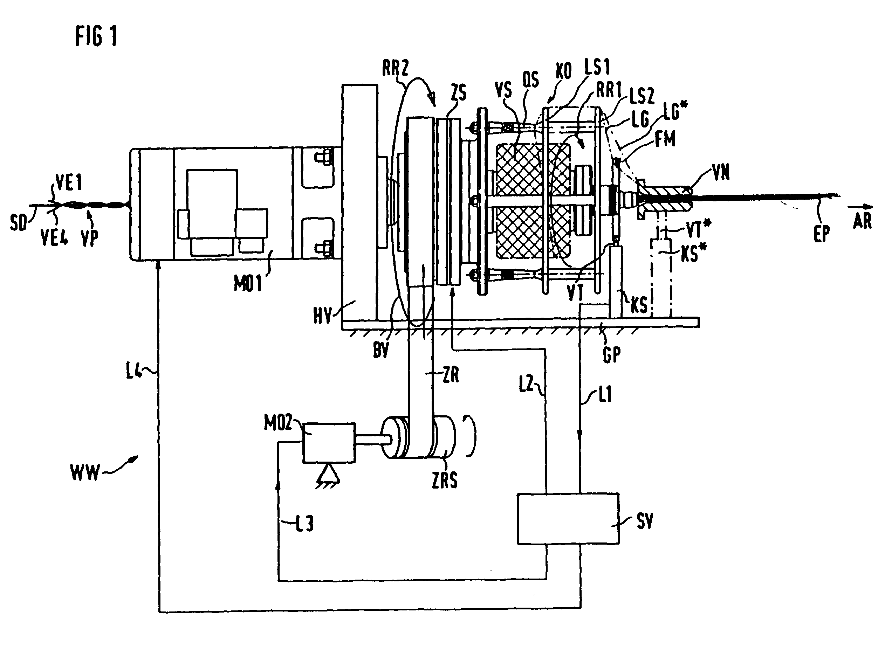

Figur 1 zeigt schematisch den Antriebsteil einer Verseileinrichtung WW mit einem Draht SD als Speicherelement zur SZ-Verseilung mehrerer, strangförmiger Verseilelemente. Im Querschnittsbild von Figur 1 sind dabei der Einfachheit halber nur zwei von n möglichen Verseilelementen mit n ≥ 2, nämlich die Verseilelemente VE1 und VE4, in der linken Bildhälfte bei ihrer Vorverseilung mit Hilfe des Speicherdrahts SD gezeichnet. Als Verseilelemente kommen vorzugsweise elektrische und/oder optische Übertragungselemente wie z.B. elektrische Leiter (Adern), Lichtwellenleiter, usw. in Frage. Sie werden auf der Oberfläche des Speicherdrahts SD dadurch mit wechselnder Schlagrichtung zu einem Verarbeitungsprodukt VP vorverseilt (SZ-Verseilung), daß dieser Speicherdraht SD abwechselnd in der einen und dann in der anderen Drehrichtung, d.h. alternierend um seine Verseilachse AR, bewegt wird. Die eingangs- sowie ausgangsseitige Aufhängung des Speicherdrahts SD sowie eine mit ihm rotierend bewegte Verseilscheibe sind in Figur 1 nicht dargestellt.

Um nun die miteinander SZ-verseilten Verseilelemente in ihrem Verseilverbund zu fixieren, d.h. um ein Aufgehen ihrer Verseilschläge, insbesondere im Bereich ihrer Umkehrstellen, weitgehend zu vermeiden, wird auf sie im Verseilbereich (bzw. im Bereich ihres gedachten Verseilpunkts) unter Zuhilfenahme eines Verseilnippels VN ein langgestrecktes Gut LG von außen aufgebracht. Als langgestrecktes Gut LG ist bevorzugt eine Haltewendel, ein faden-- oder bandförmiges Material, ein Zwirn oder dergleichen gewählt. Dieses langgestreckte Gut LG wird dabei von einer drehbaren Vorratsspule VS abgezogen, die vorzugsweise auf der Antriebswelle einer Antriebseinrichtung MO1, insbesondere einem Motor, sitzt und von diesem um die Drehachse AR rotierend angetrieben wird. Konzentrisch zur Vorratsspule VS ist um diese Drehachse AR ein Korb KO (Flyer) angeordnet, der das langgestreckte Gut LG von der Vorratsspule VS abzieht. Diesem drehbar aufgehängten Korb KO ist eine eigene, feststehende Antriebseinrichtung MO2 zugeordnet. Diese treibt über eine Zahnriemenscheibe ZRS einen Zahnrienem ZR an. Der Zahnriemen ZR greift an einem Zahnrad an, das an dem dem Verseilpunkt abgewandten Flansch des Korbes KO angebracht ist. Dieser getrennte Antrieb für den Korb KO ist durch einen Pfeil RR2 angedeutet. Demgegenüber ist im Ausführungsbeispiel von Figur 1 die davon unabhängige Rotationsbewegung der Vorratsspule VS durch einen Pfeil RR1 veranschaulicht.

Die Weghfürung des langgestreckten Gutes LG erfolgt über das Gestell des Korbes KO. Das langgestreckte Gut LG ist im Querschnittsbild von Figur 1 beispielsweise zunächst über eine sich in axialer Richtung (bzw. entlang der Drehachse AR betrachtet) erstreckende Querstange QS und über den Außenrand zweier bezüglich der Rotationsachse AR konzentrisch angeordneter Führungsscheiben LS1 und LS2 des Korbes KO geführt. Das langgestreckte Gut LG wird dann auf seinem Weg zum gedachten Verseilpunkt in axialer Richtung AR betrachtet unmittelbar hinter der Vorratsspule VS über einen feststehenden meßfühler gefürt. Dieser meßfühler ist im wesentlichen durch einen konzentrisch zur Drehachse AR angeordneten Meßring FM gebildet, durch dessen Zentrum das Verarbeitungsprodukt VP hindurchgezogen wird. Das langgestreckte Gut LG hingegen legt sich bei seiner Abzugsbewegung gespannt am Innenrand des vorzugsweise kreisrunden Meßrings FM an. Durch die Rotationsbewegung der Vorratsspule VS und/oder des korbes KO läuft dabei das Gut LG in Umfangsrichtung diesen Innenrand des Meßrings FM entlang, d.h. das langgestreckte Gut führt eine Rotationbewegung um die Drehachse AR am Innenrand des Meßrings FM anliegend aus.

Da der als Meßfühler ausgebildete Meßring FM zwischen der Vorratsspule VS und dem Verseilnippel VN positioniert bzw. angeordnet ist, können nahezu alle Zugkräfte, die am langgestreckten Gut LG vor seinem Eintreffen am gedachten Verseilpunkt wirksam werden, bei der Messung bzw. Bestimmung der Zugspannung für das langgestreckte Gut mitberücksichtigt werden. Es ist somit weitgehend vermieden, daß das langgestreckte Gut mit weiteren, nicht mitgemessenen Zusatzkräften wie z.B. zusätzlichen Reib- oder Fliehkräften in unkontrollierter Weise beaufschlagt am Verseilpunkt einläuft. Dadurch, daß der Meßring FM unmittelbar vor dem Verseilnippel VN angeordnet ist, sind Reibstellen, wie sie z.B. vorher durch das Gestell des Korbes KO für das vorwärts- transportierte, langgestreckte Gut LG gebildet sind, auf dessem Restweg vom Meßring FM zum Verseilnippel VN jetzt im wesentlichen nun nicht mehr vorhanden.

Der Meßring FM weist vorzugsweise einen Innen-Durchmesser auf, der gleich oder größer als der Innen- Durchmesser des nachfolgenden Verseilnippels VN ist. Zweckmäßigerweise ist der Innen-Durchmesser des Meßrings FM zwischen 0,2 und 20 cm, insbesondere um 10 cm, gewählt. In Figur 1 ist der Meßring FM in axialer Richtung AR betrachtet beispielsweise etwa in der Mitte zwischen der Vorratsspule VS und dem Verseilnippel VN angeordnet. Besonders günstig ist es, den als Meßring FM ausgebildeten Meßfühler möglichst unmittelbar vor dem Verseilnippel VN zu positionieren, d.h. möglichst nahe am gedachten Verseilpunkt des langgestreckten Gutes LG. So kann der Meßring FM z.B. auch bevorzugt unmittelbar am Eingang des Verseilnippels VN angebracht sein. Zweckmäßigerweise weist der Meßfühler in axialer Richtung AR betrachtet einen Abstand zwischen 5 und 10 cm zum gedachten Verseilpunkt des Verseilnippels VN auf.

Dem Meßfühler, insbesondere dem Meßring FM, ist in Figur 1 ein Kraftsensor KS zugeordnet. Dazu ist der Meßring FM mit einem Verbindungsteil VT vorzugsweise starr am Kraftsensor KS angebracht. Besonders zweckmäßig ist der Meßfühler, insbesondere der Meßring FM, und /oder sein Verbindungsteil VT jeweils als ein nicht federndes Elemente ausgebildet. Für den Meßfühler ist zweckmäßigerweise ein steifer, vorzugsweise polierter Werkstoff verwendet.

Der mit dem Meßring FM festverbundene Kraftsensor KS ist feststehend auf einer Grundplatte GP angebracht, auf der gleichzeitig auch eine Haltevorrichtung HV für die übrigen Komponenten der SZ-Verseileinrichtung WW, wie z.B. für den Korb KO, für die Antriebseinrichtung MO1, usw., befestigt ist.

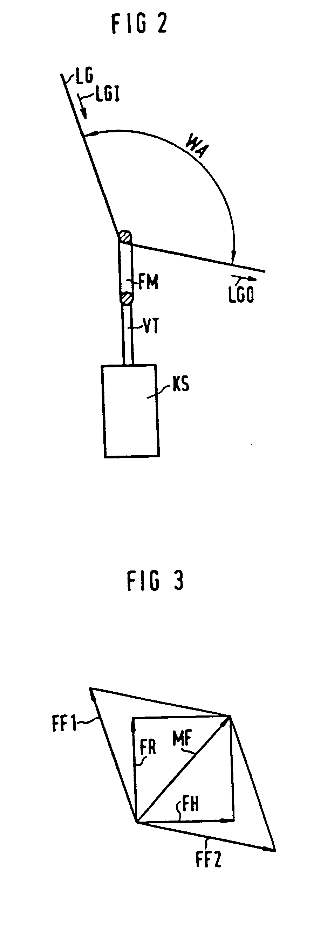

Der Meßring FM wird in seiner Ruhestellung ausschlagsfrei so justiert, daß die Drehachse AR etwa senkrecht zur gedachten, vorzugsweise im Querschnitt kreisrunden Meßringfläche steht. In Figur 2 erstreckt sich der Meßfühler in der Ruhestellung im wesentlichen senkrecht zur Drehachse AR. Der als Meßring FM ausgebildete Meßfühler erstreckt sich also im wesentlichen in radialer Richtung bezogen auf die Drehachse AR. In seiner Ruhestellung ist er zweckmäßigerweise kraft-, last- und zugfrei.

Das langgestreckte Gut LG wird nun vom Korb KO bzw. der Vorratsspule VS kommend durch den Meßring FM aus seiner ursprünglichen Abzugsrichtung abgelenkt. Diese Umlenkung durch den Meßring FM ist in Figur 2 schematisch vergrößert dargestellt. Unverändert übernommene Elemente aus Figur 1 sind in Figur 2 mit den gleichen Bezugszeichen versehen. Das langgestreckte Gut LG weist vor dem Meßring FM von seiner Vorratsspule VS kommend eine Abzugsrichtung LGI auf und wird beim Hindurchführen durch den Meßring FM in eine neue Abzugsrichtung LGO schräg auf den Verseilnippel VN zu umgelenkt bzw. abgelenkt. Durch die Umlenkung greift am Meßring FM eine Meßkraft an, die vom Kraftsensor KS ermittelt wird. Zweckmäßigerweise wird dabei das langgestreckte Gut LG um einen Winkel WA zwischen 2 und 60° aus seiner Abzugsrichtung LG vor dem Meßring FM in seine Abzugsrichtung LGO nach dem Meßring FM umgelenkt.

Die im wesentlichen durch die Umlenkung des langgestreckten Gutes LG auf den Meßfühler einwirkenden Kräfte sind beispielhaft im Kräftediagramm von Figur 3 gezeichnet. Durch die Führung des langgestreckten Gutes LG am Innenrand des Meßrings FM wird auf diesen eine Zugkraft in Gegenrichtung zur Abzugsrichtung LGI sowie eine Zugkraft in Abzugsrichtung LGO ausgeübt. Diese beiden Zugkräfte auf den Meßfühler sind in Figur 3 mit Vektorpfeilen FF1 und FF2 veranschaulicht. Ihre vektorielle Addition ergibt dann die eigentliche, auf den Meßring FM einwirkende Zugkraft, die in Figur 3 mit dem Bezugszeichen MF versehen ist. Die Zugkraft MF läßt sich z.B. in eine Radialkomponente FR sowie in eine Axialkomponente FH, die parallel zur Abzugsrichtung AR wirkt, aufteilen.

Bleibt die Position und die Lage des Meßrings FM im Betrieb konstant, d.h. er befindet sich stets unverändert am selben Ort, so ergeben sich vorzugsweise auch konstante, geometrische Verhältnisse im Kräftediagramm. Die tatsächlich am Meßring FM angreifende Zugkraft MF zeigt also stets in die gleiche Richtung, während sich ihr Betrag ändern kann. Zur Auswertung der tatsächlich am Meßring FM angreifenden Zugkraft MF genügt es dann bereits vorteilhaft, wenn der Kraftsensor KS z.B. nur eine Kraftkomponente der Zugkraft MF mißt: hier besonders bevorzugt entweder die Radialkomponente FR oder die Axialkomponente FH. Die jeweilige Kraftkomponente ist dann direkt proportional zur tatsächlich auf das langgestreckte Gut LG einwirkenden Zugkraft FF1 bzw. FF2. Auf diese Weise ist es möglich, mit Hilfe des Meßfühlers die Zugspannungskraft des langgestreckten Gutes LG in sehr einfacher Weise zu bestimmen. Gegebenenfalls kann es auch zweckmäßig sein, mittels des Kraftsensors KS direkt die tatsächliche Zugkraft MF oder auf den Meßring FM zu bestimmen und aus dieser Vektorgröße dann Rückschlüsse für die am langgestreckten Gut LG angreifende Zugspannungkraft FF1 bzw. FF2 zu bestimmen.

Verarbeitet der Kraftsensor KS von Figur 1 beispielsweise nur Kräfte in Axialrichtung des Meßfühlers, d.h. nur die jeweilige Radialkomponente FR ( vgl. Figur3 ) der tatsächlich am Meßring FM angreifenden Zugkraft MF, so ergibt sich bei der Laufbewegung des langgestreckten Gutes LG in Umfangsrichtung am Innenrand des Meßrings FM ein etwa sinusförmiger Kraftverlauf ( Sinuskurve während eines Umlaufs ), mit der der Meßring FM beansprucht wird.

Der Kraftsensor KS wandelt die aufgenommenen Zugkräfte in jeweils elektrische Meßsignale um, die über eine Leitung L1 einer Auswerteeinrichtung SV zugeführt sind. Die Auswerteeinrichtung SV erzeugt daraus Steuersignale zur Ansteuerung der Antriebseinrichtungen MO1 bzw. MO2 für die Vorratsspule VS bzw. den Korb KO. In Figur 1 steuert die Auswerteeinrichtung SV im einzelnen die Antriebseinrichtung MO1 der Vorratsspule VS über eine Leitung L4, die Antriebseinrichtung MO2 für den Korb KO über eine Leitung L3 an. Die Auswerteeinrichtung SV weist bei sinusförmigen Kraftverlauf, d.h. bei Auswertung z.B. nur der radialen Kraftkomponente FR, zweckmäßigerweise eine Auswerteelektronik auf, die als Spitzenwertmessung aufgebaut ist und aus Gründen der Meßgenauigkeit dann auch den Absolutwert des negativen Spitzenwertes miteinschließt. Es sind dann vorzugsweise zwei Meßwerte pro Umlauf des langgestreckten Gutes LG erreichbar, die gemittelt eine Meßgröße ergeben, die direkt proportional zur tatsächlich am langgestreckten Gut LG wirksam werdenden Zugkraft wie z.B. FF1 bzw. FF2 von Figur 3 ist.

Durch die verbesserte Zugspannungs- Bestimmung ist es ermöglicht, eine vorgegebene definierte Zugspannungskraft, mit der das langgestreckte Gut auf das Verarbeitungsprodukt VP im Verseilnippel VN aufgebracht wird, zumindest in einem engen Toleranzbereich oder sogar exakt einzuhalten. Da der Meßfühler in unmittelbarer Nähe zum Verseilnippel VN positioniert ist, werden alle zuvor am langgestreckten Gut LG angreifenden Kräfte auch bei der Messung mitberücksichtigt. Es gehen in die Messung auch zusätzliche Kräfte mit ein, die am langgestreckten Gut LG auf seinem Weg zum Verseilpunkt durch Reibstellen wie z.B. am Gestell des Korbes KO oder durch Fliehkräfte des um die Rotationsachse AR rotierenden, langgestreckten Gutes LG beim Abschlagen von der Vorratsspule VS hervorgerufen werden können. Das langgestreckte Gut LG kann also auf seinem Restweg vom Meßfühler zum gedachten Verseilpunkt kaum noch mit weiteren, nicht mitgemessenen Zusatzkräften wie z.B. zusätzlichen Reib- oder Fliehkräften unkontrolliert beaufschlagt werden.

Besonders zweckmäßig kann es sein, den Verseilnippel VN selbst als Meßfühler vorzusehen, d.h. der Meßfühler ist im wesentlichen durch den Verseilnippel VN gebildet. In Figur 1 ist dann der dem Verseilnippel VN zugeordnete Kraftsensor mit dem Bezugszeichen KS* sowie dessen zugehöriges Verbindungsstück mit dem Bezugszeichen VT* versehen. Das langgestreckte Gut LG verläuft auf einem geradlinigen Weg vom Korb KO kommend in den Verseilnippel VN ein, wobei es sich an den Innenmantel der konusförmigen Eingangsöffnung des Verseilnippels VN anlegt und an diesen drückt. Der Verseilnippel VN bildet somit eine Art Meßrohr bzw. Meßring für das langgestreckte Gut, das jetzt mit LG* bezeichnet und dessen Verlauf gestrichelt eingezeichnet ist. Durch die unmittelbare Bestimmung der Zugsspannung des langgestreckten Gutes LG* am Verseilort bzw. am gedachten Verseilpunkt ergeben sich vorteilhaft besonders genaue Meßwerte für die am Verseilnippel durch das Einlaufen des langgestreckten Gutes LG* verursachte Zugkraft. Daraus lassen sich besonders genau Rückschlüsse auf Betrag und Richtung der am langgestreckten LG* tatsächlich wirkenden Zugspannung, z.B. entsprechend den Figuren 2 und 3, ziehen. Auf diese Weise kann eine vorgegebene, definierte Zugspannung für das langgestreckte Gut LG* besonders genau eingehalten werden.

Es ergibt sich somit ein mit dem langgestreckten Gut LG* bzw. LG bewickeltes Endprodukt EP. Dieses weist vorzugsweise einen Durchmesser zwischen 1,5 und 9,8 mm auf. Zweckmäßigerweise ist dazu ein Verseilnippel mit einem Innen-Durchmesser zwischen 2 und 10 mm gewählt, d.h. der Innen-Durchmesser des Verseilnippels VN ist: bevorzugt etwas größer als der Außen-Durchmesser des Endprodukts EP , insbesondere zwischen 0,2 und 0,5 mm.

Zweckmäßigerweise wird als langgestrecktes Verarbeitungsprodukt eine Kabelseele elektrischer und/oder optischer Kabel gewählt. Diese Kabelseele kann beispielsweise durch elektrische und/oder optische Übertragungselemente wie z.B. elektrische Leiter (Adern), Lichtwellenleiter, usw. gebildet sein, die gegebenenfalls entsprechend Figur 1 miteinander verseilt sind. Als langgestrecktes Gut LG sind bevorzugt Fäden, Haltewendeln, Bänder, Zwirne, elektrische und/oder optische Übertragungselemente, usw. gewählt. Neben dem bevorzugten Anwendungsgebiet bei Wickeleinrichtungen in der Kabeltechnik gibt es auch weitere Möglichkeiten, bei denen das Aufbringen des langgestreckten Gutes mit möglichst definierter Zugspannung gewünscht ist. Dies können beispielsweise Wendelwickler in der Textilindustrie sein oder Wickelvorrichtungen für zu isolierende Röhren, usw.

Schließlich zeichnet sich der erfindungsgemäße Meßfühler auch dadurch aus, daß er feststehend auf einer Grundplatte (vgl. in Figur 1 GP) angebracht ist. Dadurch ist es nicht erforderlich, daß der Meßfühler mit dem langgestreckten Gut mitrotiert. Dies erspart eine aufwendige Aufhängung des Meßfühlers und reduziert zugleich die Schwungmasse der Verseileinrichtung. Dies spielt insbesondere eine nicht unerhebliche Rolle bei großen Rotationsgeschwindigkeiten wie sie z.B. beim Verseilen von Lichtwellenleitern zu einem optischen Übertragungselement oder Nachrichtenkabel auftreten können. Insbesondere können mit der SZ-Drahtspeicher-Verseilmaschine von Figur 1 Rotationsgeschwindigkeiten bis zu 8000 Umdrehungen pro Minute gefahren werden.

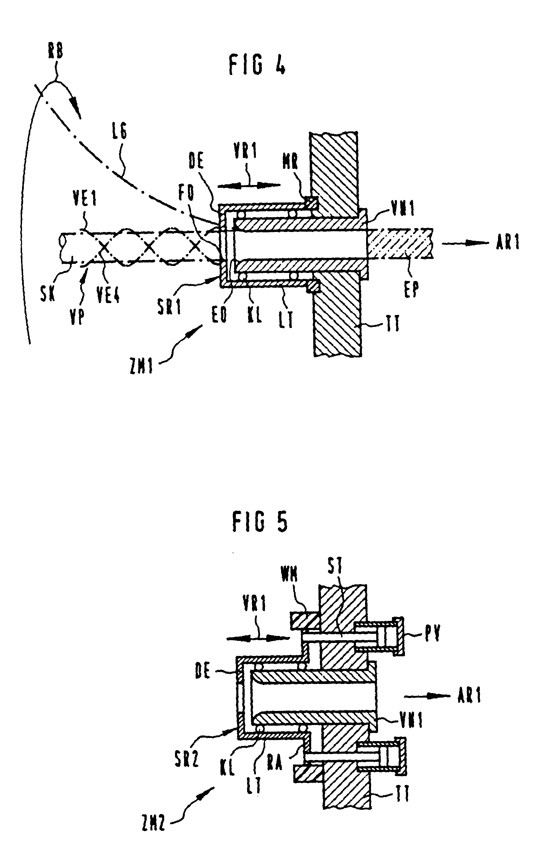

Figur 4 zeigt schematisch im Querschnitt eine erfindungsgemäßen Meßvorrichtung ZM1 zur Messung der Zugspannung eines langgestreckten Gutes LG beim Aufbringen auf ein langgestrecktes Verarbeitungsprodukt VP. In der Figur 4 sind das Verarbeitungsprodukt VP sowie das langgestreckte Gut LG zusätzlich strichpunktiert angedeutet. Das Verarbeitungsprodukt VP wird dort mit dem langgestreckten Gut LG vorzugsweise umwickelt. Als langgestrecktes Verarbeitungsprodukt VP kommen insbesondere Strukturen bzw. Konfigurationen von elektrischen und/oder optischen Übertragungselementen in Frage. Dies können beispielsweise Gruppen von elektrischen Leitern (Adern) wie z.B. sogenannte "ICCS- Vierer" ("integrated computer communication systems"), Gruppen oder Bündel von Lichtwellenleitern, von Lichtwellenleiter- Hohladern, insbesondere von thermoplastischen oder sonstigen dünnwandigen Hohladern, von Lichtwellenleiter- Bündeladern, Lichtwellenleiter-Bändchen von Bändchenstapeln, sowie sonstige Konfigurationen von elektrischen und/oder optischen Adern insbesondere zur Nachrichtenübertragung sein. Die elektrischen und/oder optischen Übertragungselemente werden bevorzugt unter Zuhilfenahme des langgestreckten Gutes LG zu einer Gruppe zusammengefaßt. Bevorzugt ist das Verarbeitungsprodukt VP durch eine Kabelseele mit elektrischen und/oder optischen Übertragungselementen gebildet. Die Übertragungselemente können dabei lose oder gegebenenfalls miteinander verseilt vorliegen. Bevorzugt ist das Verarbeitungsprodukt VP durch mindestens ein Bündel von Lichtwellenleitern gebildet, die zu einer Gruppe lose zusammengefaßt oder ggf. auch miteinander verseilt sein können. In der Figur 4 sind der Einfachheit halber nur zwei von n möglichen Übertragungselementen mit n ≥ 2, nämlich die Übertragungselemente VE1 und VE4, in der linken Bildhälfte beispielhaft bei ihrer Verseilung auf ein kreiszylinderförmiges Zentralelement SK strichpunktiert gezeichnet. Als Zentralelement SK ist vorzugsweise ein elektrisches und /oder optisches Übertragungelement, ein Bündel von elektrischen und/oder optischen Übertragungselementen oder ein zugfestes Kernelement z.B. aus Aramid- oder Stahldrähten verwendet. Die Übertragungselemente können als Verseilelemente vorzugsweise mit wechselnder Schlagrichtung (SZ-Verseilung) miteinander verseilt sein, wobei gegebenenfalls auch das Zentralelement SK entfallen kann.

Um nun die miteinander vorzugsweise SZ-verseilten Übertragungselemente, wie z.B. VE1, VE4, in ihrem Verseilverbund zu fixieren, d.h. ein Aufgehen ihrer Verseilschläge insbesondere im Bereich ihrer Umkehrstellen weitgehend zu vermeiden, wird auf sie im Bereich ihres gedachten Verseilpunktes unter Zuhilfenahme eines Verseilnippels VN1 das langgestreckte Gut LG von außen aufgebracht, insbesondere aufgewickelt. Als langgestrecktes Gut LG sind bevorzugt Fäden, Haltewendeln, Bänder, Zwirne, elektrische und/oder optische Übertragungselemente, sowie sonstiges faden- oder bandförmiges Material gewählt. Insbesondere ist eine Bewicklung mit Fäden geringer Biegefähigkeit und/oder Dehnfähigkeit zweckmäßig.

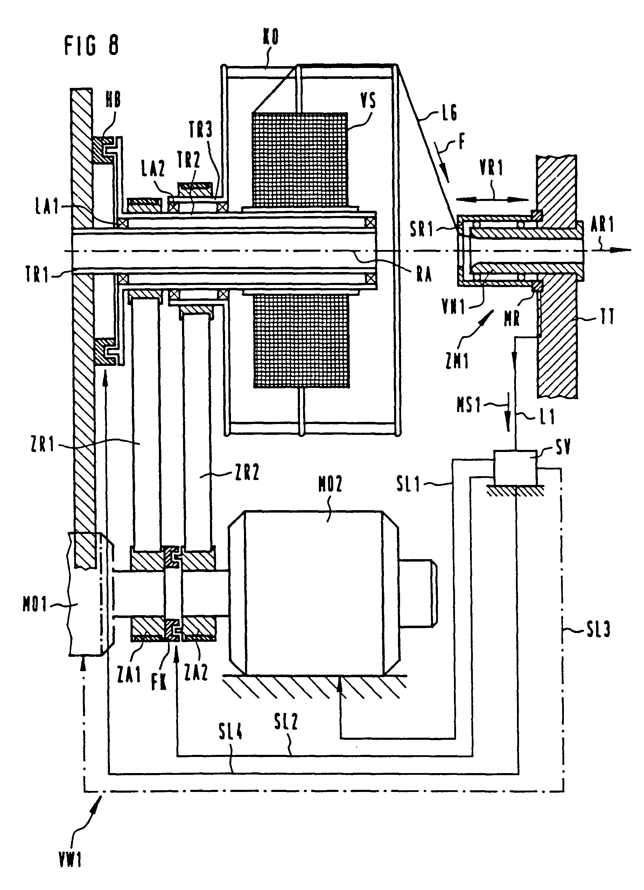

Der Verseilnippel VN1 legt vorzugsweise auch den Verseilpunkt für die miteinander zu verseilenden Verseilelemente VE1, VE4, insbesondere Lichtwellenleiter, fest. Der Verseilnippel VN1 ist dazu als ein etwa kreiszylinderförmiges Rohr ausgebildet, das sich in axialer Dunchlaufrichtung AR1, d.h. entlang der axialen Abzugsachse des Verarbeitungsprodukts VP erstreckt. Im Eingangsbereich weist der Verseilnippel VN1 eine etwa trichterartig bzw. konisch zulaufende Eingangsöffnung EO auf. Er ist mit seinem ausgangsseitigen Ende an einem feststehenden Trageteil TT horizontal liegend fest angebracht, wobei sich das Trageteil TT in vertikaler Richtung erstreckt. Durch diesen Verseilnippel VN1 ist in axialer Abzugsrichtung AR1 das Verarbeitungsprodukt VP hindurchgeführt. Dabei wird es von dem langgestreckten Gut LG in Umfangsrichtung vorzugsweise wendel- bzw. schraubenlinienförmig bewickelt bzw. umsponnen, so daß sich das fertige Endprodukt EP am Ausgang des Verseilnippels VN1 ergibt. Das langgestreckte Gut LG wird dazu von einer sich drehenden Vorratsspule (VS wie z.B. in Figur 8 dargestellt) abgezogen, die um die Abzugsachse AR1 rotiert. Diese Rotationsbewegung des langgestreckten Gutes LG rings um das Verarbeitungsprodukt VP ist in der Figur 4 mit einem Pfeil RB angedeutet. Die Vorratsspule VS ist der Übersichtlichkeit halber in der Figur 4 weggelassen worden. Das langgestreckte Gut LG läuft am Innenrand der trichterförmigen Eingangsöffnung des Verseilnippels VN1 ringsum, d.h. in Umfangsrichtung um das Verarbeitungsprodukt VP herum, und bewickelt es dadurch wendelförmig.

Um nun die Zugspannung F des langgestreckten Gutes LG möglichst genau bestimmen bzw. messen zu können, ist dem Verseilnippel VN1 ein Meßfühler SR1 zugeordnet. Dieser Meßfühler SR1 umgibt den Verseilnippel VN1 und damit auch das Verarbeitungsprodukt VP vorzugsweise konzentrisch. Er ist ringförmig, insbesondere kreiszylinderförmig, ausgebildet. Er weist somit vorteilhaft eine rotationssymmetrische Gestalt auf, durch die auf ihn z.B. einseitige Krafteinwirkungen weitgehend vermieden sind. Die Zentral- bzw. Längsachse des Meßfühlers SR stimmt vorzugsweise möglichst mit der axialen Abzugsachse AR1 des Verarbeitungsprodukts VP überein, d.h. er ist konzentrisch zur axialen Abzugsachse AR1 aufgehängt. In der Figur 4 ist der Meßfühler SR1 als eine Art Meßdose mit einem Zylinderteil LT sowie einem ringförmigen Deckelteil DE über die Eingangsöffnung EO des Verseilnippels VN1 übergestülpt. Dabei sitzt seine Führungsöffnung FO für das langgestreckte Gut LG im Deckelteil DE unmittelbar vor der Eingangsöffnung EO des Verseilnippels VN1. Das Zylinderteil LT des ringförmigen Meßfühlers SR1 weist in Figur 1 einen Innendurchmesser auf, der vorzugsweise etwas größer als der Innendurchmesser des nachfolgenden Verseilnippels VN1 gewählt ist. Insbesondere weist das Zylinderteil ZT einen Innendurchmesser auf, der zwischen 1,5 und 5 mal größer als der Innendurchmesser des Verseilnippels VN1 gewählt ist. Vorzugsweise ist der Innen-durchmesser des Meßfühlers SR1 zwischen 1,5 und 5 mal größer als der Außendurchmesser des Verarbeitungsprodukts VP gewählt. Zweckmäßigerweise entspricht der Innendurchmesser der im wesentlichen kreisrunden Führungsöffnung FO des Meßfühlers SR1 dem Innendurchmesser der Eingangsöffnung EO des Verseilnippels VN1. Vorzugsweise ist die Führungsöffnung FO etwas größer als die Eingangsöffnung EO gewählt, um für das langgestreckte Gut LG einen stetigen, glatten, insbesondere parabelförmigen Führungsweg zum gedachten Verseilpunkt sicherstellen zu können. Dazu ist der Innenrand des Meßfühlers SR1 in der Führungsöffnung FO vorzugsweise abgerundet, um Beschädigungen des langgestreckten Gutes LG bei dessen Abzug möglichst zu vermeiden.

Der Meßfühler SR1 ist außen auf dem Außenumfang des Verseilnippels VN1 entlang der axialen Abzugsachse AR1 verschiebbar gelagert, was durch einen Doppelpfeil VR1 angedeutet ist. Die axiale Verschiebbarkeit des Meßfühlers SR1 entlang der axialen Abzugsachse AR1 wird in der Figur 4 mittels Kugellager KL im Zwischenraum zwischen der Innenwand des zylinderförmigen Längsteils LT des dosenartigen Meßfühlers SR1 und der Außenwand des Verseilnippels VN1 bewirkt. Als Lagermittel für die axiale Verschiebbarkeit des Meßfühlers SR1 kommen natürlich auch vorzugsweise Gleitlager, Luftlager, oder dergleichen in Frage. Durch diese reibungsarme sowie rotationssymmetrische Aufhängung des Meßfühlers SR1 bezüglich der axialen Abzugsachse AR1 sind Beaufschlagungen der Meßwerte mit unzulässigen Störgrößen und damit Verfälschungen des Meßergebnisses weitgehend vermieden. Der Meßfühler SR umgibt in der Figur 4 also vorzugsweise das langgestreckte Gut LG und gleichzeitig das Verarbeitungsprodukt VP, d.h. beide zusammen bzw. gemeinsam, ringförmig. Insbesondere umgibt er das langgestreckte, im wesentlichen geradlinig in Abzugsrichtung verlaufende Verarbeitungsprodukt VP konzentrisch. Dabei ist er entlang der axialen Abzugsachse AR1 des Verarbeitungsproduktes VP sowie gleichzeitig des langgestreckten Gutes LG verschiebbar aufgehängt, d.h. seine Längs- bzw. Zentralachse stimmt im wesentlichen lagegenau mit der axialen Abzugsachse überein. Mit anderen Worten heißt das, daß der Meßfühler SR derart aufgehängt ist, daß der Mittelpunkt seiner Führungsöffnung FO möglichst auf der axialen Abzugsachse AR1 liegt. Das langgestreckte Gut LG sowie das Verarbeitungsprodukt VP werden zusammen durch den ringförmigen Meßfühler SR hindurchgeführt, wobei das Verarbeitungsprodukt VP vom langgestreckten Gut LG im Meßfühler SR umlaufen wird.

Dem Meßfühler SR1 von Figur 4 ist ausgangsseitig mindestens ein Kraftsensor MR zugeordnet, der am Trageteil TT feststehend befestigt ist. Dieser Kraftsensor MR ist in Figur 1 als Druckmeßring ausgebildet, auf den das Längsteil LT des dosenartigen Meßfühlers SR1 ausgangsseitig bei Krafteinwirkung durch das langgestreckte Gut LG drückt. Erhöht sich beispielsweise die Zugspannungskraft F des langgestreckten Gutes LG, so wird auch stärker am Innenrand der Führungsöffnung FO des Meßfühlers SR1, d.h. am Einlaß des Deckelteils DE, in Abzugsrichtung bzw. entlang der axialen Abzugsachse AR1 gezogen. Der über den Verseilnippel VN1 gestülpte Meßfühler SR1 wird daher in axialer Richtung mitgenommen, d.h. er bewegt sich in axialer Richtung weiter auf den Druckmeßring MR zu, und erzeugt dort eine erhöhte Druckkraft. Nimmt umgekehrt die Zugspannungskraft F des langgestreckten Gutes LG wieder ab, so ist auch die Reibungskraft des langgestreckten Gutes LG durch seine Abzieh- bzw. Schleifbewegung am Innenrand der Führungsöffnung FO reduziert. Dadurch ist auch die auf den Meßfühler SR1 einwirkende, axiale Komponente der Zugspannungskraft F verkleinert, so daß die Mitnahmebewegung auf den Druckmeßring MR nachläßt. Es wird beim Druckmeßring MR somit eine kleinere Druckkraft wie zuvor gemessen. Zweckmäßig kann es gegebenenfalls auch sein, den Meßfühler SR1 drehbar aufzuhängen, so daß er durch das in seiner Führungsöffnung FO umlaufende, langgestreckte Gut LG in Rotation versetzt werden kann. Dies reduziert in vorteihafter Weise weiter die Reibung am durchlaufenden, langgestreckten Gut LG.

Die erfindungsgemäße Meßvorrichtung ZM1, insbesondere der erfindungsgemäße Meßfühler SR1, zeichnet sich vor allem dadurch aus, daß eine Änderung der am langgestreckten Gut LG wirksam werdenden Zugspannungskraft F nahezu verzögerungsfrei in eine meßbare Druckkraft umgesetzt werden kann. Dazu bildet der Druckmeßring MR ausgangsseitig einen festen Anschlag für das Fußende des axial verschiebbaren Meßfühlers SR1, d.h. zwischen dem ausgangsseitigen Ende des Längsteils LT des Meßfühlers SR1 und des Druckmeßrings MR besteht nahezu kein Spiel und damit nahezu kein Verzögerungsweg. Vorzugsweise ist der Meßfühler sogar derart am Druckmeßring MR in einer unbelasteten Ruheposition angebracht, daß bereits minimale Längsverschiebungen des Meßfühlers SR1 eine meßbare Druckkraft im Druckmeßring hervorrufen. Sobald im Betrieb ein langgestrecktes Gut LG am Innenrand der Führungsöffnung FO des Meßfühlers SR1 in Umfangsrichtung entlangläuft sowie dabei in Richtung auf das Verarbeitungsprodukt VP zu abgezogen wird, drückt das ausgangsseitige Ende des Meßfühlers SR1 am Druckmeßring MR auf. Ausgehend von dieser Arbeitsstellung belastet nun der Meßfühler SR1 den Druckmeßring MR je nach Verschiebelage einmal mehr oder weniger. Dadurch ist es ermöglicht, die tatsächliche Zugspannung am langgestreckten Gut LG nahezu verzögerungsfrei und damit besonders reaktionsschnell in eine axiale Verschiebebewegung des Meßfühlers SR1 und letztlich in eine meßbare Druckkraft umzusetzen. Diese Druckkraft ist bei etwa konstantem Einlaufwinkel des langgestreckten Gutes LG in den etwa trichterförmigen Eingangsbereich, der durch die hintereinandersitzenden Eingangsöffnungen FO bzw. EO des Meßfühlers SR1 bzw. des Verseilnippels VN1 gebildet ist, direkt proportional zur Axialkraftkomponente der tatsächlich am langgestreckten Gut LG wirksam werdenden Zugspannungskraft F. Der als Druckmeßring ausgebildete Kraftsensor MR wandelt die erzeugte Druckkraft vorzugsweise in ein elektrisches Meßsignal um, das zur Steuerung bzw. Regelung der Zugspannung des langgestreckten Gutes LG weiter ausgewertet werden kann. (Nähere Erläuterungen zur Auswertung werden zu der Figur 8 gemacht).

Weiterhin ist durch die ringförmige Gestalt des Deckelteils DE, insbesondere die zylinderförmige Form des Längsteils LE des Meßfühlers SR1 sowie die ringförmige Ausbildung des Kraftsensors MR sichergestellt, daß bei der Rotationsbewegung des langgestreckten Gutes LG um die Längsachse des Verarbeitungsprodukts VP, d.h. beim Umlauf des langgestreckten Gutes LG am Innenrand der Führungsöffnung FO des Meßfühlers SR1, die Axialkraftkomponente der jeweilig ausgeübten Zugspannung F kontinuierlich bzw. stetig erfaßt werden kann. Mit anderen Worten heißt das, daß in jeder Umlaufposition des langgestreckten Gutes LG um den Außenumfang des Verarbeitungsprodukts VP ständig bzw. jederzeit ein Meßsignal erzeugt und bereitgestellt wird. In jeder Umlaufwinkelposition wird durch den ringförmige Ausbildung von Meßfühler und Kraftsensor ein Meßsignal für die tatsächlich am langgestreckten Gut LG angreifende Zugspannungskraft gewonnen. Auf diese Weise ist eine lückenlose, weitgehend verzögerungsfreie Meßsignalaufnahme für die Zugspannungskraft F und damit deren zeitlich vollständige bzw. weitgehend ununterbrochenen Überwachung ermöglicht. Da der Meßfühler SR1 in axialer Richtung verschiebbar gelagert ist, wird vorteilhaft auch nur die in Längsrichtung wirkende Komponente der Zugspannungskraft F gemessen, so daß eine besonders einfache Beurteilung bzw. Auswertung der aufgenommenen Meßsignale ermöglicht ist. Eine nachträgliche Kraftzerlegung ist also somit nicht erforderlich. Die reibungsarme, axiale Verschiebbarkeit des Meßfühlers erlaubt verzögerungsarm eine direkte Umsetzung der Zugspannungskraft in eine dazu proportionale Druckmeßkraft. Verfälschungen des Meßergebnisses durch unzulässige Störgrößen sind dadurch weitgehend vermieden, so daß die tatsächlich am langgestreckten Gut LG angreifende Zugspannung im wesentlichen fehlerfrei gemessen werden kann. Dies spielt insbesondere bei der Messung von sehr kleinen Zugspannungen eine nicht unerhebliche Rolle, wie sie z.B. beim Aufbringen einer Haltewendel auf ein Bündel von zu umwickelnder Lichtwellenleiter vorgegeben sind.

Ein derartiger Meßfühler vermeidet insbesondere gegenüber üblichen Tänzermeßeinrichtungen z.B. große Schwungmassen weit außerhalb der Rotationsachse der Vorratsspule und/oder deren zugehörige Abwickelvorrichtung. Auf diese Weise ist es ermöglicht, die Zugspannung des langgestreckten Gutes besonders schnell sowie genau zu messen, d.h. möglichst ohne die unzulässige Beaufschlagung mit Störgrößen. Etwaige Zugspannungsschwankungen, die z.B. von unterschiedlichen Weglängen des langgestreckten Gutes beim Abwickeln von der Vorratsspule herrühren, können unmittelbar erfaßt und zur Auswertung bereitgestellt werden. Dadurch ist es vorteilhaft ermöglicht, Abweichungen vom vordefinierten, gewünschten Wert der Zugspannungskraft F für das langgestreckte Gut LG, d.h. Spannungsschwankungen, verzögerungsarm zu erkennen und ggf. auszuregeln. Auch sind durch die reibungsarme sowie verzögerungsarme Aufhängung des Meßfühlers SR1 überhaupt erst sehr kleine Zugspannungen erfaßbar, da in die Messung Störgrößen weit weniger miteingehen können. Eine Beaufschlagung des Meßfühlers SR1 mit undefinierten Kräften ist also weitgehend vermieden, so daß die eigentliche, d.h. tatsächliche Zugspannungskraft F des langgestreckten Gutes gemessen werden kann.

Figur 5 zeigt eine zu Figur 4 modifizierte Meßvorrichtung ZM2 mit einem abgewandelten Meßfühler SR2, wobei unverändert übernommene Elemente aus der Figur 1 mit den gleichen Bezugszeichen versehen sind. Der Meßfühler SR2 ist im Unterschied zum Meßfühler SR1 von Figur 4 zusätzlich mit einer Vorspannung in axialer Richtung beaufschlagt. Dazu sind in der Figur 5 axiale Vorspannungsmittel PV wie z.B. pneumatische Kolben vorgesehen. Diese sind am feststehenden Trageteil TT konzentrisch zum Verseilnippel VN1 ausgangsseitig angebracht. Anstelle der pneumatischen Kolben können zweckmäßigerweise auch Druckfedern oder dergleichen verwendet sein. Die pneumatischen Kolben sind in der Figur 5 jeweils in eine Durchgangsbohrung des Trageteils TT eingelassen. Mit ihren Stößeln ST greifen sie dabei jeweils auf der anderen Seite des Trageteils TT (linksseitig) am radial nach außen abstehenden, ausgangsseitigen Rand RA des Meßfühlers SR2 an. Der Meßfühler SR2 von Figur 5 ist gegenüber dem Meßfühler SR1 von Figur 4 also dahingehend modifiziert, daß er in der Figur 5 zusätzlich eine radial nach außen weisende Krempe am Fußende seines kreiszylinderförmigen Längsteils LT aufweist. Ansonsten ist er gleich ausgebildet. Diesem radial nach außen abstehenden, ringsum laufenden, flanschartigen Rand RA des Meßfühlers SR1 ist radial weiter außen ein vorzugsweise ringförmiger Wegmeßaufnehmer WM zugeordnet. Dieser Wegmeßaufnehmer WM ist ebenfalls am Trageteil TT fest angebracht. Er erstreckt sich dabei etwa parallel zur axialen Achse AR1 und umgibt den Rand RA des Meßfühlers SR2 rohrförmig, insbesondere konzentrisch. Als Wegmeßaufnehmer WM kommt vorzugsweise eine Lichtschranke, eine kapazitive oder induktive Meßsonde oder dergleichen in Frage. Der modifizierte Meßfühler SR2 ist mit seinem radial nach außen abstehenden Rand RA gegenüber dem feststehenden Wegmeßaufnehmer WM in axialer Richtung analog zur Aufhängung von Figur 4 verschiebbar gelagert. Je nach Lage des Randes RA wird dem Meßfühler SR2 ein bestimmter, relativer Verschiebeweg zugeordnet, der eine Veränderung der Zugspannungskraft des langgestreckten Gutes LG wiedergibt. Da der Meßfühler SR2 innerhalb des ringförmigen Wegmeßaufnehmers WM gleiten kann, ist eine weitgehend reibungsarme Meßwertaufnahme ermöglicht. Vorzugsweise ist der Rand RA des Meßfühlers SR1 mit Spiel, d.h. mit einem Spalt bzw. Abstand, zum Wegmeßaufnehmer MR angebracht, was eine berührungslose Lagemessung ermöglicht. Dies spielt insbesondere bei der Erfassung von sehr kleinen Zugspannungskräften eine Rolle, um Verfälschungen der Meßwerte durch Störgrößen weitgehend zu vermeiden.

Mit Hilfe der Vorspannungsmittel PV, insbesondere pneumatische Kolben, ist es vorteilhaft ermöglicht, den Meßfühler SR eine definierte, unbelastete Ruheposition bzw. Ausgangslage zuzuweisen. Unter Einwirkung der Zugspannung des langgestreckten Gutes LG verschiebt sich der Meßfühler SR2 in Abzugsrichtung bzw. entlang der axialen Achse AR1 in eine Arbeitsposition. Der dabei von der Ruhe- zur Arbeitsposition zurückgelegte Verschiebeweg wird vom Wegmeßaufnehmer WM als weiter auswertbare Meßgröße erfaßt. Diese ist direkt proportional zur Axialkomponente der tatsächlich am langgetreckten Gut LG angreifenden Zugspannungskraft.

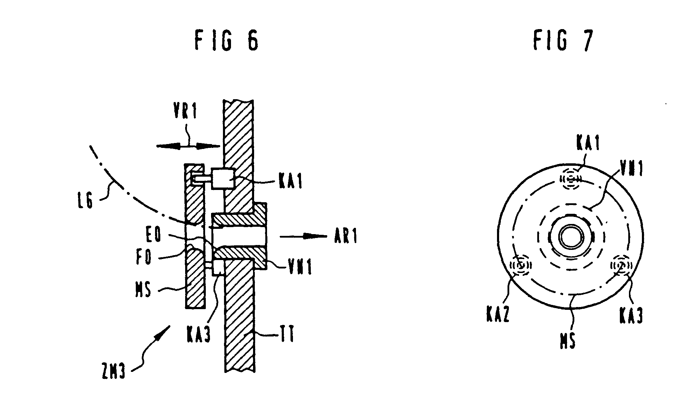

Figur 6 zeigt eine weitere erfindungsgemäße Vorrichtung ZM3 zur Erfassung der Zugspannung eines langgestreckten Gutes LG, wobei unverändert übernommene Elemente aus den Figuren 4 und 5 jeweils mit den gleichen Bezugszeichen versehen sind. Im Unterschied zu den Figuren 4 mit 5 ist in der Figur 6 der Meßfühler als etwa kreisrunde Meßscheibe MS ausgebildet. Sie ist unmittelbar vor der Eingangsöffnung EO des Verseilnippels VN1 unbeweglich, d.h. feststehend angebracht. Die Führungsöffnung FO dieser Meßscheibe MS ist radial nach innen bogenförmig abgerundet, um Beschädigungen des empfindlichen langgestreckten Gutes LG möglichst zu vermeiden. Durch die unmittelbare Nähe zu dem gedachten Punkt, an dem das langgestreckte Gut LG auf den Außenumfang des Verarbeitungsprodukts VP aufläuft bzw. aufsitzt (= Verseilpunkt), ist weitgehend vermieden, daß das langgestreckte Gut mit nichtmitgemessenen Zusatzkräften wie z.B. zusätzlichen Reib- oder Fliehkräften beaufschlagt am Verseilpunkt einläuft. Vielmehr ist durch die Messung möglichst nahe am gedachten Verseilpunkt weitgehend sichergestellt, daß die tatsächlich am langgestreckten Gut LG wirksam werdende Zugspannungskraft unmittelbar vor dessen Aufbringen auf das Verarbeitungsprodukt VP im wesentlichen fehlerfrei, d.h. möglichst exakt, gemessen werden kann.

Die Meßscheibe MS ist an drei Punkten über drei einzelne Kraftaufnehmer am Trageteil TT befestigt, d.h. die Meßscheibe MS liegt an drei in Umfangsrichtung gleichmäßig verteilten Kraftmessern an. Im Querschnittsbild von Figur 6 ist der Einfachheit halber nur ein Kraftmesser bzw. Kraftaufnehmer KA1 eingezeichnet. In Umlaufrichtung, d.h. in einer zur Zeichenebene von Figur 3 um 90° herausgeklappten Bildebene, sind in der Figur 7 die beiden weiteren Kraftaufnehmer KA2 sowie KA3 schematisch strichpunktiert angedeutet. Die Kraftaufnehmer KA1 mit KA3 liegen dabei in Umfangsrichtung betrachtet vorzugsweise jeweils um 120° gegeneinander versetzt. Sie bilden eine kipparme, weitgehend stabile Meßebene, die eine gleichmäßige Verteilung der an der Meßscheibe MS angreifenden Zugspannungskraft auf die drei zugeordneten Druck-Kraftaufnehmer KA1 mit KA3 ermöglicht.

Das in Richtung auf das Bearbeitungsprodukt VP in der Führungsöffnung FO umgelenkte, langestreckte Gut LG übt bei seinem Umlauf am Innenrand der Führungsöffnung FO der Meßscheibe MS eine axiale Kraftkomponente auf die Meßscheibe MS auf. Dadurch verschiebt sich die Meßscheibe bzw. der Meßring konzentrisch zum Verarbeitungsprodukt VP entlang der axialen Abzugsachse AR1 und drückt dabei auf die Kraftaufnehmer KA1 mit KA3. Bei einem 360° Umlauf werden von den drei Kraftaufnehmern KA1 mit KA3 somit unabhängig voneinander drei Axialkraftkomponenten gemessen. Die Summe dieser drei gemessenen Axialkräfte ist bei konstanter Zugspannung F des umlaufenden, langgestreckten Gutes LG ebenfalls konstant. Verzögerungsarm, d.h. unmittelbar ohne wesentlichen Zeitverlust, kann ein kraftproportionales Meßsignal zur weiteren Auswertung zur Verfügung gestellt werden. Auf diese Weise kann jeweils das Summensignal aus diesen drei während eines Umlaufs gewonnenen Axialkräften z.B. mit einem vorgebbaren Sollwertsignal für die Zugspannungskraft F verglichen werden.

Wird mehr als ein langgestrecktes Gut dem Meßfühler nach Figur 6 zugeführt, so kann vorteilhaft die Einzelzugspannung für jedes langgestreckte Gut dennoch separat bzw. selektiv voneinander gemessen werden. Dazu werden die am jeweiligen Meßsensor, wie z.B. KA1, hervorgerufenen Meßsignale entsprechend der zeitlichen Abfolge der umlaufenden langgestreckten Güter getastet. Bei z.B. zwei zu messenden, langgestreckten Gütern werden diese vorzugsweise um 90° versetzten Umfangspositionen am Innenumfang der Führungsöffnung FO der Meßscheibe MS zum jeweiligen Meßzeitpunkt zugeordnet, d.h. jeweils zum Zeitpunkt der Messung der Zugspannung des einen Meßgutes mit einem der drei Kraftsensoren befindet sich das andere Meßgut in einer um 90° versetzten Umfangsposition. Die Meßsignale für das zweite, langgestreckte Gut werden dann jeweils eine Viertelumdrehung später nach den Meßsignalen für das erste Meßgut von den drei Kraftsensoren KA1 mit KA3 der Reihe nach erfaßt und zur weiteren Auswertung bereitgestellt. Durch diesen 90° Versatz befindet sich das momentan nicht gemessene langgestreckte Gut jeweils senkrecht zur aktuellen, momentanen Meßachse. Eine Beeinflussung des jeweilig gerade mit einem der Kraftaufnehmer KA1 mit KA3 gemessenen langgestreckten Gutes durch die Umlaufbewegung des anderen, zweiten Meßgutes ist dadurch weitgehend vermieden.

Bei drei oder mehr umlaufenden Meßgütern werden die Kraftsensoren KA1 mit KA3 zweckmäßigerweise entsprechend zu obigem Meßprinzip derart getaktet werden, daß jeweils nur eines der Meßgüter von jeweils einem der Kraftaufnehmer gemessen wird. Die übrigen Meßgüter befinden sich dabei zum jeweiligen Meßzeitpunkt vorzugsweise an Umfangspositionen, die nicht mit der der Kraftaufnehmer zusammenfallen.

Da die Meßfühler entsprechend den Figuren 4 mit 6 jeweils weitgehend verzögerungsarm auf Änderungen der Zugsspannungskraft des langgestreckten Gutes LG reagieren, ist vorteilhaft eine besonders schnelle Zugspannungsbestimmung ermöglicht. Dies gilt vorzugsweise selbst bei sehr niedrigen Zugspannungen, insbesondere beim Anfahren und Anhalten des Bewicklungsprozesses für das jeweilige Verarbeitungsprodukt. Insbesondere sind mit den erfindungsgemäßen Meßfühlern entsprechend den Figuren 4 mit 6 Zugspannungen des langgestreckten Gutes LG selbst noch von weniger als 100 cN, insbesondere von höchstens 50 cN, erfaß- bzw. meßbar. Der erfindungsgemäße Meßfühler arbeitet insbesondere selbst bei Zugspannungsschwankungen von mehr als 10 cN einwandfrei. Damit verbleibt ein etwaiger Meßfehler vorzugsweise von höchstens 5%. Dies spielt eine nicht unbedeutende Rolle insbesondere bei Wickeleinrichtungen in der Kabeltechnik. Dort sind besonders hohe Anforderung an die möglichst exakte Einhaltung einer bestimmten Zugspannung gestellt.

Verschiedene Varianten solcher Wickeleinrichtungen werden nachfolgend an Hand der Figuren 8 mit 15 näher erläutert. Sie weisen jeweils eine erfindungsgemäße Meßeinrichtung, vorzugsweise entsprechend den Figuren 4 mit 7, auf. Unverändert übernommene Elemente aus den Figuren 4 mit 7 sowie Teile mit einander entsprechender Funktion und Wirkungsweise sind in den nachfolgenden Ausführungen zu den Figuren 8 mit 15 jeweils mit den gleichen Bezugszeichen versehen.

Die um eine gemeinsame Rotationsachse RA rotierende, konzentrisch aufgebaute bzw. rotationssymmetrisch ausgebildete Anordnung eines Haltewendelwicklers VW1 in Figur 8 weist als Bauteile ein inneres, feststehendes Tragelement bzw. Tragrohr TR1 auf. Durch dessen etwa kreiszylinderförmige Durchgangsbohrung wird das Verarbeitungsprodukt VP zentrisch hindurchgeführt. Auf diesem Tragrohr TR1 ist mittels Lager LA1 ein weiteres, insbesondere etwa kreiszylinderförmiges Tragrohr TR2 konzentrisch sowie drehbar um die axiale Abzugsachse AR1 gelagert. Auf diesem Tragrohr TR2 sitzt die Vorratsspule VS endseitig in Abzugsrichtung AR1 betrachtet fest auf. Das Tragrohr TR2 ist wiederum von einem weiteren, äußeren Tragrohr TR3 für eine Abwickelvorrichtung KO, insbesondere einem Korb (Flyer), konzentrisch umgeben. Die Abwickelvorrichtung KO ist über Lager LA2 auf dem Tragrohr TR2 in Umlaufrichtung um die Rotationsachse RA drehbar gelagert. Die rotierende Abwickelvorrichtung KO ist somit zur rotierenden Vorratsspule VS konzentrisch aufgehängt, so daß sich eine "in sich verschachtelte" Anordnung von Vorratsspule und Abwickelvorrichtung ergibt.

Der Abwickelvorrichtung KO ist eine eigenständige Antriebseinrichtung MO2, insbesondere ein Drehstrom- oder Wechselstrommotor, zugewiesen. Dieser versetzt über ein Zahnrad ZA2 mit zugehörigem Zahnriemen ZR2 das Tragrohr TR3 und damit die Abwickelvorrichtung KO in Rotation. An diese Antriebseinrichtung MO2 ist über eine Friktionskupplung FK ein Antrieb (bestehend aus einem Zahnrad ZA1 mit zugehörigen Zahnriemen ZR1) für das Tragrohr TR2 der Vorratsspule VS gekoppelt, so daß auch die Vorratsspule VS in Rotation versetzt wird. Weiterhin kann das Tragrohr TR2 für die Vorratsspule VS mit Hilfe einer feststehenden, einlaufseitig angeordneten Bremseinrichtung HB, insbesondere Hysteresebremse, gezielt abgebremst werden. Das Tragrohr TR2 weist dazu einlaufseitig einen radial nach außen abstehenden, ringförmigen Rand auf, der in eine ringförmige Laufnut am Außenumfang der Hysteresebremse eingreift.

Von der Vorratsspule VS wird das langgestreckte Gut LG mit Hilfe der Abwickelvorrichtung KO abgezogen und dem Verseilnippel VN1 z.B. über die konzentrisch zu ihm angeordnete Meßvorrichtung ZM1 von Figur 4 zugeführt. Die Meßvorrichtung ZM1 ist also in Durchlaufrichtung betrachtet der Abwickelvorrichtung KO nachgeordnet. Die am ringförmigen Kraftsensor MR entsprechend den Ausführungen zu Figur 4 hervorgerufenen Druckkräfte aufgrund der axialen Verschiebebewegung des Meßfühlers SR1 unter der Einwirkung der Zugspannung des langgestreckten Gutes LG werden im Kraftsensor MR in elektrische Meßsignale MS1 umgewandelt und über eine Leitung L1 einer Auswerte-/Steuereinrichtung SV mitgeteilt. Diese Auswerte/Steuereinrichtung SV vergleicht die jeweils bevorzugt kontinuierlich einlaufenden Istwert-Meßsignale MS1 mit einem vorgebbaren Sollwert und leitet aus deren Differenz Steuersignale zur Ansteuerung der Vorratsspule VS und/oder der Abwickelvorrichtung KO ab. Zweckmäßig kann es auch sein, die Meßwerte für die Zugspannungskraft digital zu erfassen, d.h. pro Umlaufperiode des langgestreckten Gutes im Meßfühler mehr als einen Abtastwert an die Auswerte-/Steuereinrichtung SV weiterzuleiten. Beispielsweise ist die Antriebseinrichtung MO2 für die Abwickelvorrichtung KO über eine Steuerleitung SL1 ansteuerbar. Die Friktionskupplung FK läßt sich über eine Steuerleitung SL2 von der Auswerte-/Steuereinrichtung SV aus regeln, d.h. der Grad der Ankopplung zwischen den beiden Antrieben für die Vorratsspule VS und der Abwickelvorrichtung KO läßt sich in definierter Weise einstellen. Des weiteren kann die Bremseinrichtung HB für die Vorratsspule VS gezielt über eine Steuerleitung SL4 beeinflußt werden. Dies ist vorzugsweise bei einer starren Ankopplung zwischen der Abwickelvorrichtung KO und der Vorratsspule VS über die Friktionskupplung FK zweckmäßig.

Aufgrund der Ankopplung des Antriebes für die Vorratsspule VS über die Friktionskupplung FK an die Antriebseinrichtung MO2 für die Abwickelvorrichtung KO folgt die Vorratsspule VS der Rotationsbewegung der Abwickelvorrichtung KO im wesentlichen gleichzeitig, d.h. synchron, in die gleiche Drehrichtung nach. Zweckmäßigerweise wird das Verhältnis der Drehgeschwindigkeiten von Vorratsspule und Abwickelvorrichtung derart eingestellt, daß die Vorratsspule VS mit einer größeren Umdrehungsgeschwindigkeit als die Abwickelvorrichtung KO rotiert. Dadurch wird das langgestreckte Gut LG weitgehend beanspruchungsfrei, d.h. mit möglichst geringer Zugspannung, von der Vorratsspule VS abgezogen. Dann kann es ggf. bereits ausreichend sein, lediglich die Bremseinrichtung HB über die Steuerleitung SL4 von der Auswerte-/Steuereinrichtung SV her gezielt anzusteuern und die Vorratsspule VS definiert abzubremsen, um eine definierte Zugspannung F für das langgestreckte Gut LG einhalten zu können. Bei einer derartigen Brems-/Antriebskombination wird die Vorratsspule somit über die Steuerleitung SL2 von der Auswerte- /Steuereinrichtung SV vorzugsweise drehmomentgeregelt. Zusätzlich oder unabhängig hiervon kann die Antriebeinrichtung MO2 über die Steuerleitung SL1 von der Auswerte-/Steuereinrichtung SV ebenfalls drehmomentgeregelt werden.

Selbstverständlich ist es auch möglich, anstelle der Friktionskupplung FK eine unabhängige Antriebseinrichtung MO1, insbesondere einen Torque Motor, auch für die Vorratsspule VS eigens vorzusehen. Diese Antriebseinrichtung MO1 ist in der Figur 8 strichpunktiert angedeutet. Sie wird über eine strichpunktiert eingezeichnete Steuerleitung SL3 von der Auswerte-/Steuereinrichtung SV ebenfalls in definierter Weise in Abhängigkeit von der jeweilig gemessenen Zugspannungskraft geregelt. Insbesondere werden die beiden Antriebseinrichtungen MO1 sowie MO2 mit Hilfe der Auswerte-/Steuereinrichtung SV drehmomentgeregelt.

Zweckmäßig kann ggf. auch eine Drehzahlregelung der beiden Antriebseinrichtungen MO1, MO2 sein. Dabei kann die in der Figur 8 eingezeichnete Bremseinrichtung HB für die Vorratsspule gegebenenfalls entfallen. Anstelle der Bremseinrichtung HB ist für die Vorratsspule VS die Antriebseinrichtung MO1 vorgesehen und hinsichtlich ihrer Drehzahl regelbar (drehzahlgeregelt). Die Antriebseinrichtung MOl ist somit in der Art eines sogenannten 4Q- Antriebs definiert verlangsambar oder beschleunigbar. Gleiches gilt vorzugsweise auch für die Antriebseinrichtung MO2.

Gegebenenfalls kann es auch zweckmäßig sein, die Zuordnungen der Antriebs- und Bremseinrichtungen zu der Vorratsspule sowie der Abwickelvorrichtung zu vertauschen.

Die Auswerte-/Steuereinrichtung SV ist also in vorteilhafter Weise mit der jeweiligen Antriebseinrichtung MO1, MO2, FK und/oder der Bremseinrichtung (wie z.B. HB )der Abwickelvorrichtung und/oder der Vorratsspule VS rückgekoppelt. Dadurch kann beim Vorwärts- Haltewendelwickler VW1 von Figur 8 die Zugspannung des langgestreckten Gutes, insbesondere beim Hochlauf oder beim Abschalten der Verseileinrichtung in definierter Weise, d.h. ohne unzulässig hohe Zugspannungsschwankungen, eingehalten werden. Der jeweils der tatsächlichen Zugspannung F direkt proportionale Meßwert MS1 dient also vorteilhaft zur Regelung der Umlaufgeschwindigkeit bzw. der Drehzahl der Abwickelvorrichtung KO und/oder der Vorratsspule VS. Weiterhin lassen sich mit der erfindungsgemäßen Meßeinrichtung auch sofort Anrisse oder Durchrisse des langgestreckten Gutes LG erkennen und gegebenenfalls die Anlage stoppen.

Für einen einwandfreien Betrieb kann beispielsweise folgendes Regelschema zweckmäßig sein:
Es wird ein Sollwert- Toleranzbereich für erlaubte Zugspannungswerte des langgestreckten Gutes mit einer unteren Schranke und einer oberen Schranke vorgegeben bzw. festgelegt. Wird die obere Schranke überschritten, so wird das langgestreckte Gut LG mit einer zu großen Zugspannung belastet bzw. beaufschlagt. Um dies möglichst schnell rückgängig zu machen, weist die Auswerte-/Steuereinrichtung SV z.B. die Bremseinrichtung BV über die Steuerleitung SL4 an, die Vorratsspule VS weniger stark abzubremsen, d.h. die Rotationsgeschwindigkeit bzw. die Drehzahl der Vorratsspule VS wird gegenüber der Rotationsgeschwindigkeit der Abwickelvorrichtung erhöht. Wird die untere Schranke unterschritten, so läuft eine zu große Menge des langgestreckten Gutes LG von der Vorratsspule VS ab, d.h. das langgestreckte Gut LG liegt mit einer zu geringen Wickelspannung am Verarbeitungsprodukt VP an oder es kann schlimmstenfalls sogar zu Knäuelbildungen kommen,falls mehr langgestrecktes Gut LG von der Vorratsspule VS abgewickelt als vom Verarbeitungsprodukt VP in axialer Richtung AR1 mitgenommen wird. Deshalb wird z.B. die Bremseinrichtung HB von der Auswerte-/Steuereinrichtung SV über die Steuerleitung SL3 angewiesen, stärker die rotierende Vorratsspule VS zu bremsen, d.h. die Drehzahl der Vorratsspule VS herabzusetzen bzw. die rotierende Vorratsspule zu verlangsamen. Somit wird das langgestreckte Gut LG wieder mit einer ausreichenden Zugspannung beaufschlagt. Auf diese Weise kann das langgestreckte Gut LG innerhalb eines engen Toleranzbereiches mit einer definierten Zugspannung auf das Verarbeitungsprodukt VP aufgebracht werden. Insbesondere erlaubt die Regelung die Einstellung einer im wesentlichen konstanten, gleichbleibenden Zugspannungkraft für das langgestreckte Gut LG. Denn etwaige Überschreitungen oder Unterschreitungen des vorgebbaren Toleranzbereiches lösen unmittelbar, d.h. verzögerungsarm entsprechende Ausgleichsreaktionen aus. Vorzugsweise ist es ermöglicht, Störgrößen im msec- Bereich, insbesondere innerhalb 2 bis 10 msec, auszugleichen bzw. zu beseitigen. Auf diese Weise ist es in vorteilhafter Weise ermöglicht, das Verseilprodukt VP, insbesondere ein Lichtwellenleiter- Bündel, mit dem langgestreckten Gut mit einer möglichst gleichmäßigen und/oder niedrigen Zugspannung zu umspinnen. Dies ist einwandfrei auch bei sehr hohen Drehzahlen, insbesondere von mehr als 1500 Upm, ermöglicht.

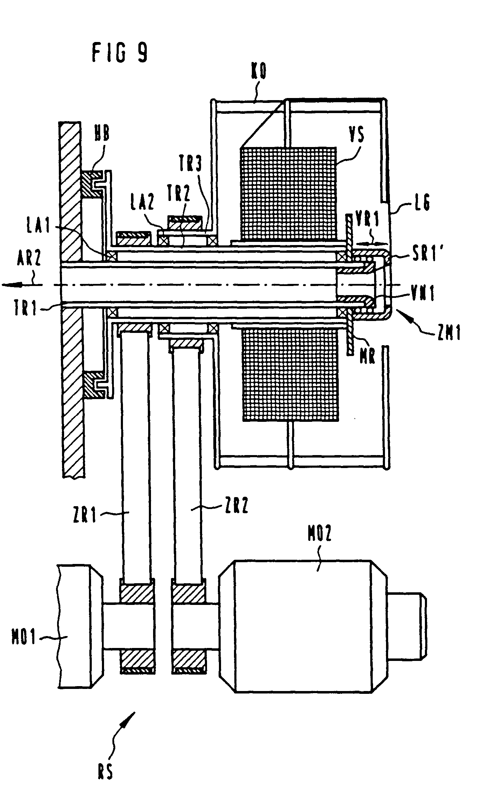

In den Figuren 9 mit 15 ist die Auswerte-/Steuereinrichtung SV von Figur 8 mit ihren zugehörigen Steuerleitungen der Übersichtlichkeit halber jeweils weggelassen worden. Die Antriebs- /Bremseinrichtungen in den Figuren 9 mit 15 werden selbstverständlich auch mit einer entsprechenden Auswerte/Steuereinrichtung geregelt.

Figur 9 zeigt schematisch einen Rückwärts- Haltewendelwickler RS, bei dem im Unterschied zu Figur 8 das Verarbeitungsprodukt jetzt in Gegenrichtung AR2, d.h. entgegengesetzt zur ursprünglichen Abzugsrichtung AR1 von Figur 8, und damit "rückwärts" durch das innere Tragrohr TR1 hindurchgezogen wird. Aus diesem Grund ist die Meßvorrichtung ZM1 von Figur 4 jetzt umgekehrt zu ihrer Orientierung von Figur 8 an diesem inneren, feststehenden Tragrohr TR1 einlaufseitig(, d.h. in der rechten Bildhälfte,) fest montiert. Ansonsten erfolgt die Betriebsweise dieses erfindungsgemäßen Wendelwicklers RS analog zu der des Vorwärtswendelwicklers VS1 von Figur 8.

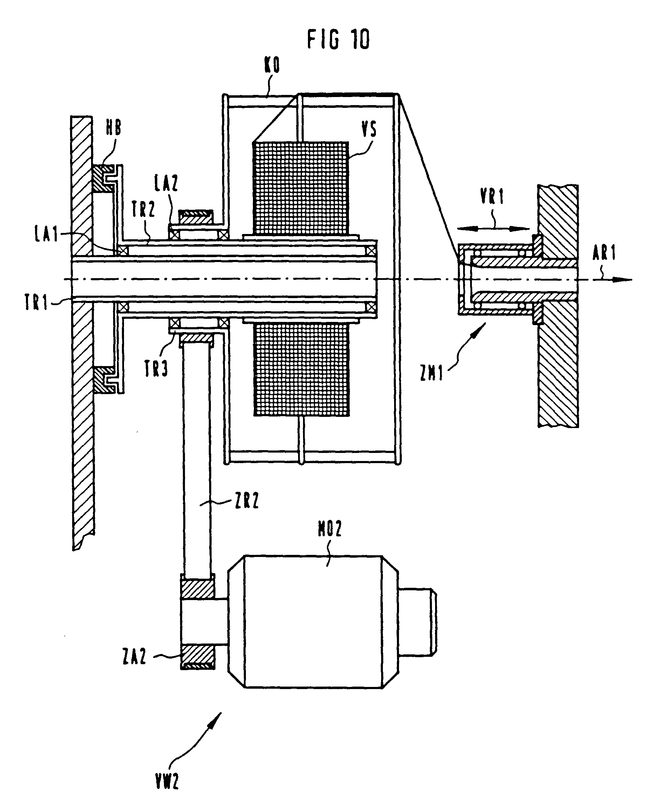

Figur 10 zeigt einen weiteren Vorwärtswendelwickler VW2 als Abwandlung zum Wendelwickler VW1 nach Figur 8. In Figur 10 ist im Unterschied zu Figur 8 der direkte Antrieb MO1 für die Vorratsspule VS bzw. der indirekte (gekoppelte) Antrieb bestehend aus dem Zahnrad ZA1, dem Zahnriemen ZR1 sowie der Friktionskupplung FK weggelassen worden. Die Vorratsspule VS wird vielmehr in Figur 10 lediglich über die Lagerreibung des Lagers LA2 zwischen dem Tragrohr TR3 der Abwickelvorrichtung KO und dem Tragrohr TR2 der Vorratsspule VS indirekt in Drehrichtung der Abwickelvorrichtung KO automatisch mitgenommen.

Auf diese Weise ist eine baulich besonders einfache Antriebs-Brems-Kombination der Abwickelvorrichtung KO und der Vorratsspule VS gebildet.

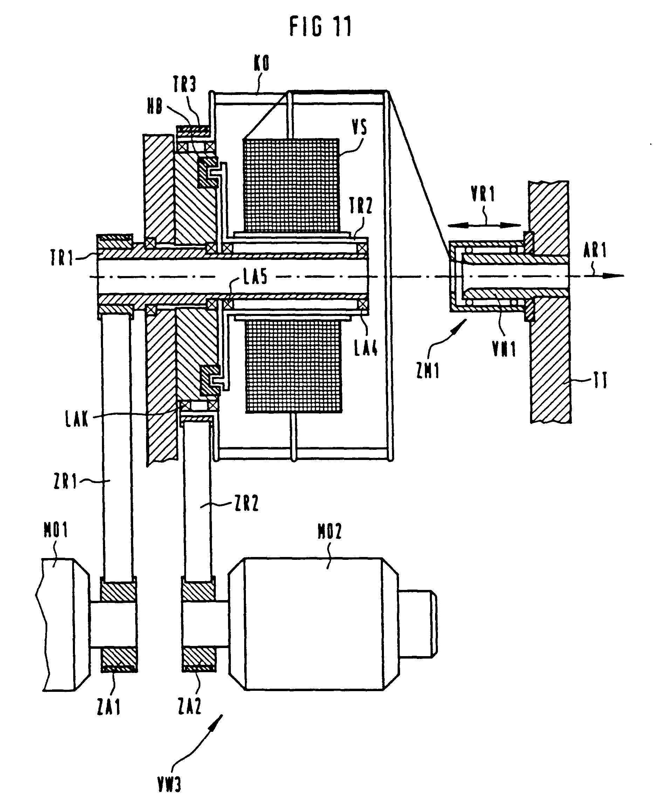

Figur 11 zeigt einen weiteren, modifizierten Vorwärts- Haltewendelwickler VW3. Im Unterschied zum Haltewendelwickler VW1 von Figur 8 ist jetzt das innere Tragrohr bzw. die Hohlspindel TR1 drehbar aufgehängt. Die getrennte Antriebseinrichtung MO1 ist jetzt diesem inneren Trahrohr TR1 zugeordnet und nicht wie in der Figur 8 dem Tragrohr TR2 der Vorratsspule VS. Die Vorratsspule VS wird in der Figur 11 lediglich über die Lagerreibung von Lagern LA4, LA5 zwischen ihrem Tragrohr TR2 und dem inneren Tragrohr TR1 in dessen Drehrichtung selbsttätig sowie indirekt mitgenommen. Dabei ist die Abwickelvorrichtung KO über Lager LAK gegenüber der Bremseinrichtung HB drehbar aufgehängt. Dadurch ist ein besonders einfacher, baulich getrennter Aufbau des Haltewendelwicklers VW3 ermöglicht, da die Bremseinrichtung HB baulich nach innen in die Abwickelvorrichtung KO hinein versetzt angeordnet werden kann.

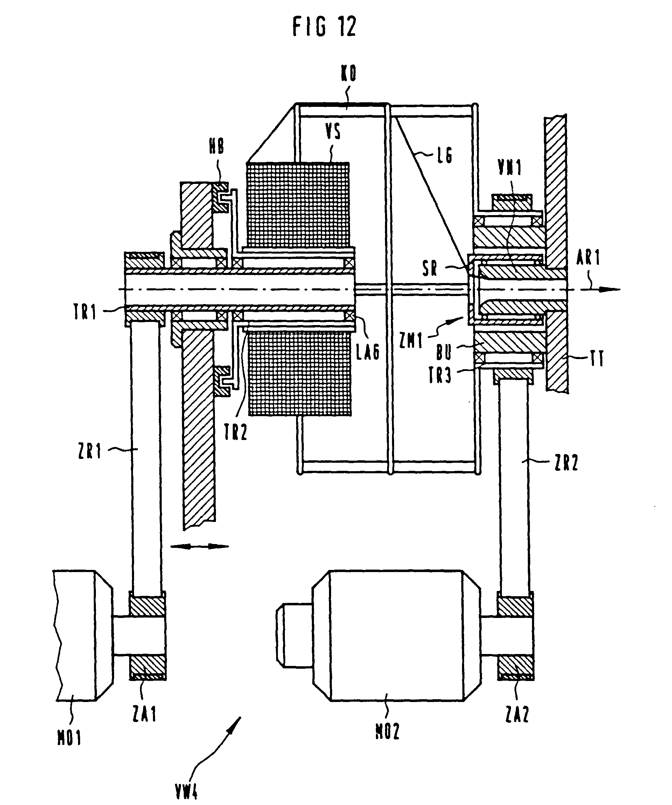

Figur 12 zeigt einen weiteren, gegenüber Figur 8 abgewandelten Vorwärts- Wendelwickler VW4, bei dem die Abwickelvorrichtung KO und die Vorratspule VS gegenüberliegend gelagert sind. Einlaufseitig wird das jetzt drehbar aufgehängte, innere Tragrohr TR1 mit Hilfe der getrennten Antriebseinrichtung MO1 betätigt. Die Mitnahme der Vorratsspule VS erfolgt lediglich über die Lagerreibung des Lagers LA6 zwischen dem Tragrohr TR2 der Vorratsspule VS und dem inneren Tragrohr TR1. Ausgangsseitig sitzt die erfindungsgemäße Meßvorrichtung ZM1 von Figur 4 jetzt feststehend in einer zusätzlichen Buchse BU am feststehenden Trageteil TT. Außen auf dieser Buchse BU ist das Tragrohr TR3 für die Abwickelvorrichtung KO drehbar gelagert. Im Unterschied zu Figur 8 ist die Abwickelvorrichtung KO in der Figur 9 also umgekehrt orientiert aufgehängt. Ihr Antrieb erfolgt wiederum über den Antrieb MO2 entsprechend den Ausführungen von Figur 8. Damit ist eine baulich auseinandergezogene Anordnung gebildet, deren Einzelkomponenten frei zugänglich sind. Außerdem ist vorteilhaft zwischen der Vorratsspule VS und der Meßeinrichtung ZM1 genügend Platz geschaffen, ggf. eine weitere Vorratsspule in der Abwickelvorrichtung KO zusatzlich auf Vorrat zu halten.

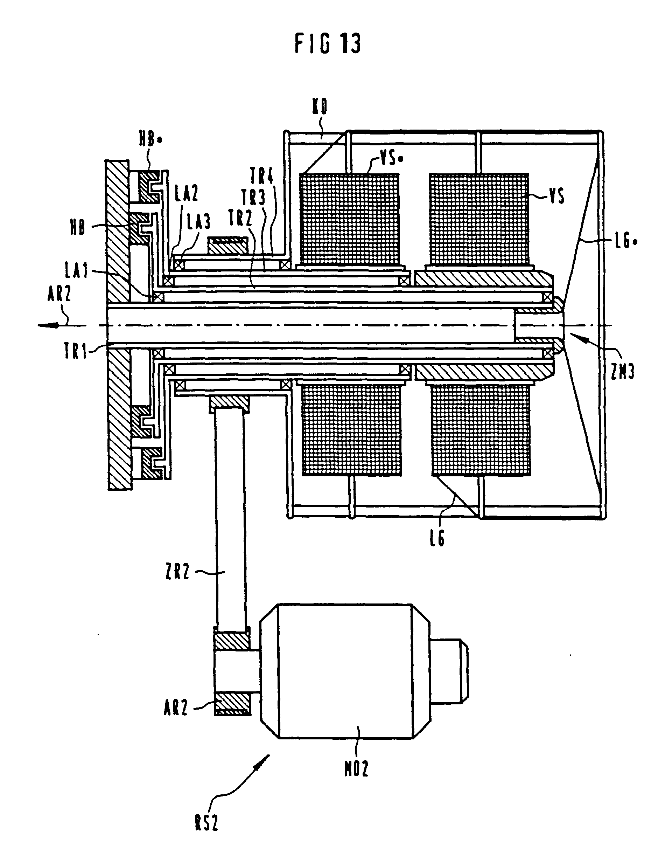

Figur 13 zeigt schließlich in Abwandlung zu Figur 9 einen Doppelwendelwickler RS2 für eine zweigängige Bewicklung des Verarbeitungsprodukts. Dazu sind zwei Vorratsspulen VS, VS* in Reihe hintereinandergeschaltet. Die zusätzliche Vorratsspule VS* sitzt fest auf dem in Achsrichtung verlängerten Tragrohr TR3 von Figur 9 in Abzugsrichtung AR2 betrachtet hinter der Vorratsspule VS. Dabei ist der zusätzlichen Vorratsspule VS* eine getrennte bzw. separate Bremseinrichtung HB* zugeordnet, die konzentrisch zur Bremseinrichtung HB von Figur 9 angeordnet ist. Für die Abwickelvorrichtung KO ist außen um das Tragrohr TR3 ein zusätzliches, weiteres Tragrohr TR4 konzentrisch vorgesehen, das gegenüber dem Tragrohr TR3 mittels Lager LA3 drehbar aufgehängt ist. Die Abwickelvorrichtung KO sitzt dabei auf dem Tragrohr TR4 fest auf. Ausgehend vom feststehend angeordneten, innersten Tragrohr TR1 ist darüber konzentrisch mittel Lager LA1 das Tragrohr TR2, darüber mittels Lager LA2 das Tragrohr TR3 sowie schließlich darüber mittels Lager LA3 das Tragrohr TR4 konzentrisch sowie drehbar aufgehängt. Auf diese Weise kann von der Vorratsspule VS das langgestreckte Gut LG sowie von der Vorratsspule VS* das langgestreckte Gut LG* jeweils getrennt unter Zuhilfenahme der Abwickelvorrichtung KO einer erfindungsgemäßen Meßeinrichtung entsprechend den Figuren 4 mit 6 zur getrennten Bestimmung ihrer jeweiligen Zugspannung zugeführt werden. Vorzugsweise erfolgt die Auswertung der Meßsignale und die Regelung bzw. Steuerung der Zugspannung des jeweiligen langgestreckten Gutes LG, LG* selektiv entsprechend den Ausführungen zu den Figuren 6 und 8. Bei dieser gestaffelten Anordnung von Figur 13 werden die Vorratsspulen VS, VS* jeweils lediglich passiv über die Lagerreibung der Lager LA3, LA2 sowie LA1 in die jeweilige Drehrichtung mitgenommen. Aktiv angetrieben wird hingegen die Abwickelvorrichtung KO mit der Antriebseinrichtung MO2 über das Tragrohr TR4.

In der Figur 13 ist vorzugsweise die Meßeinrichtung ZM3 nach Figur 6 am einlaufseitigen Ende des inneren, feststehenden Tragrohrs TR1 starr befestigt. Zur getrennten Ermittlung und Bereitstellung einer Meßgröße für die jeweilige Zugspannung des langgestreckten Gutes LG bzw. LG* ist eine getaktete Auswertung zweckmäßig. Dazu wird jeweils das zu messende langgestreckte Gut LG bzw. LG* in seiner Winkelposition erfaßt. Zu demjenigen Zeitpunkt, zu dem das jeweilige langgestreckte Gut an dem für die getaktete Messung vorbestimmbaren Kraftaufnehmer KA1 mit KA3 entsprechend Figur 6 vorbeistreicht, wird der jeweils aufgenommene Meßwert mit dem für diesen Aufnehmer vorgebbaren Sollwert verglichen. Die jeweilig gebildete Soll-Istwert-Differenz wird zur separaten Regelung der Drehzahl der einzelnen Vorratsspulen VS, VS* sowie der Abwickelvorrichtung KO herangezogen.

Vorzugsweise werden für eine zweigängige Bespinnung des Verarbeitungsprodukts die beiden langgestreckten Güter LG, LG* in Umfangsrichtung um 180° versetzt zueinander geführt, um möglichst gleichmäßige Abstände voneinander einstellen zu können. Dabei heben sich die Radialkräfte auf die Meßeinrichtung ZM3 in vorteilhafter Weise auf.

Zweckmäßig kann es gegebenenfalls auch sein, der Vorratsspule VS, der Vorratspule VS* sowie der Abwickelvorrichtung KO zusätzlich oder unabhängig hiervon jeweils getrennte Antriebseinrichtungen zuzuordnen.

Vorzugsweise kann der Doppelwendelwickler RS2 von Figur 13 auch so betrieben werden, daß das Verarbeitungsprodukt mit einer Kreuzwendel umwickelt wird. Dazu rotieren die beiden Vorratsspulen VS, VS* zweckmäßigerweise mit voneinander verschiedenen Drehrichtungen.

Die Anordnung Von Figur 13 ist vorzugsweise auch auf das arbeiten mit mehr als, zwei Vorratsspulen übertragbar, wobei dann eine getrennte Regelung für jede Vorratsspule entsprechend obigen Ausführungen durchgeführt wird.

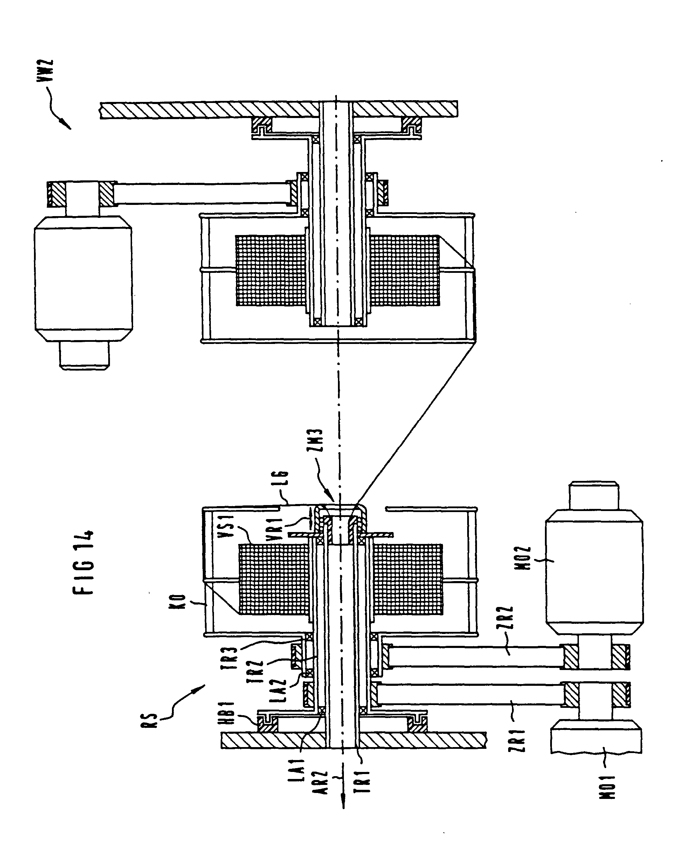

Figur 14 zeigt schließlich eine Kombination aus dem Vorwärtswendelwickler VW2 von Figur 10 und dem in Abzugsrichtung AR2 nachgeordneten Rückwärts- Wendelwickler RS von Figur 9. Der Rückwärts- Wendelwickler RS arbeitet dabei z.B. mit der erfindungsgemäßen Meßeinrichtung ZM3 nach Figur 6. Der Einfachheit halber sind beim Vorwärtswendelwickler VW2 die Bezugszeichen weggelassen worden. Das von dessen Vorratsspule abgezogene langgestreckte Gut ist zur Vermeidung von Verwechslungen jetzt mit LG2 bezeichnet. Die Zugspannungskräfte der beiden langgestreckten Güter LG (von der Vorratsspule VS des Wendelwicklers RS) sowie LG2 (von der Vorratsspule VS des Rückwärts- Wendelwicklers VW2 ) werden vorzugsweise durch ein und dieselbe Zugspannungs- Meßeinrichtung beim Wendelwickler RS zur getrennten Messung ihrer Zugsspannungskräfte durchgeführt. Dazu sind die beiden langgestreckten Güter LG, LG2 in der Führungsöffnung der erfindungsgemäßen Meßeinrichtung ZM3 von Figur 6 vorzugsweise um 90° versetzt in Umlaufrichtung betrachtet einander zugeordnet. Insbesondere werden beide Haltewendelwickler RS sowie VW2 mit entgegengesetzter Drehrichtung zueinander betrieben, so daß die beiden langgestreckten Güter LG, LG2 kreuzwendelförmig auf das Verarbeitungsprodukt aufgebracht werden können. Durch die vorzugsweise 90° Versetzung der beiden langgestreckten Güter LG, LG2 in Umfangsrichtung betrachtet kann das jeweilige langgestreckte Gut an einem bestimmten, zugeordneten Kraftsensor gemessen werden, während sich das andere langgestreckte Gut senkrecht zur aktuellen Meßachse befindet und damit das Meßsignal des ersten, gerade gemessenen langgestreckten Gutes im wesentlichen unbeeinflußt bleibt.

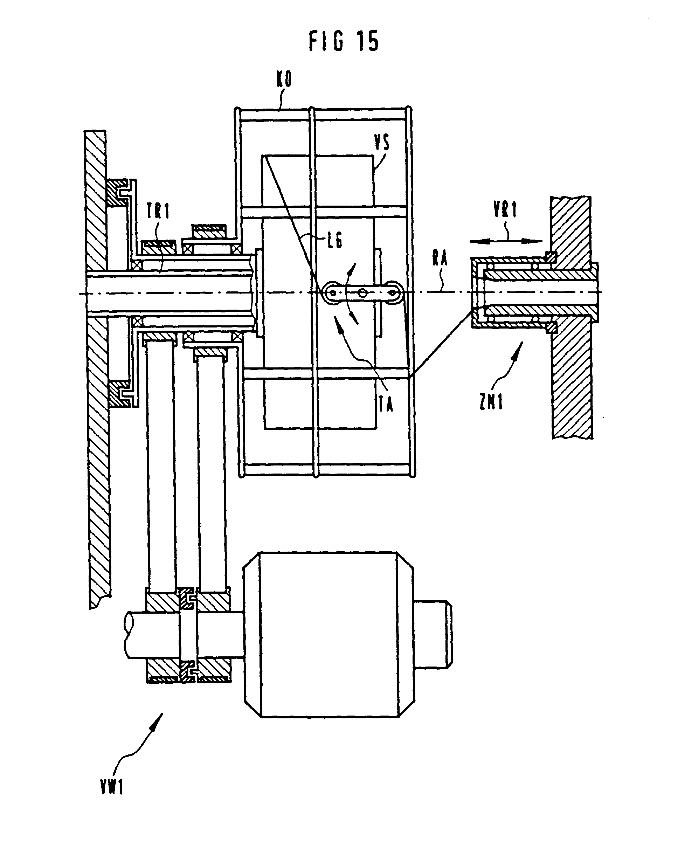

In der Figur 15 ist beim Wendelwickler VW1 von Figur 8 zusätzlich eine Tänzereinrichtung TA vorgesehen. Nur die wesentlichen Bezugszeichen von Figur 8 wurden übernommen, während die dortigen übrigen Bezugszeichen der Übersichtlichkeit halber weggelassen worden sind. Die Tänzereinrichtung TA ist in der umlaufenden, rotierenden Abwickelvorrichtung KO untergebracht. Sie kann dabei z.B. an der ausgangsseitigen Stirnseite des feststehenden Tragrohrs TR1 angebracht sein. Das langgestreckte Gut LG ist über die Tänzereinrichtung TA zwischen seinem Abhebeort von der Vorratsspule VS und vor dem Verlassen der Abwickelvorrichtung KO geführt. Die Drehachse der Tänzereinrichtung TA liegt vorzugsweise etwa parallel zur Rotationsachse RA der Abwickelvorrichtung KO. Dabei ist die Tänzereinrichtung TA so aufgehängt, daß sie queraxial zur Rotationsachse RA ausschwenkbar ist. Dadurch ist es unterstützend zum erfindungsgemäßen Regelsystem ermöglicht, etwaige hochfrequente Spannungsschwankungen des langgestreckten Gutes LG weiter auszugleichen, die ggf. aufgrund der Ansprechzeiten des Regelsystems nicht mehr schnell genug beseitigt werden können. Insbesondere ist die Tänzereinrichtung TA massearm ausgelegt. Die Tänzereinrichtung TA kann beispielsweise durch eine bei der Rotation der Komponenten der Anlage etwaig entstehende Luftströmung oder durch die Zugspannung des langgestreckten Gutes ausgelenkt werden.

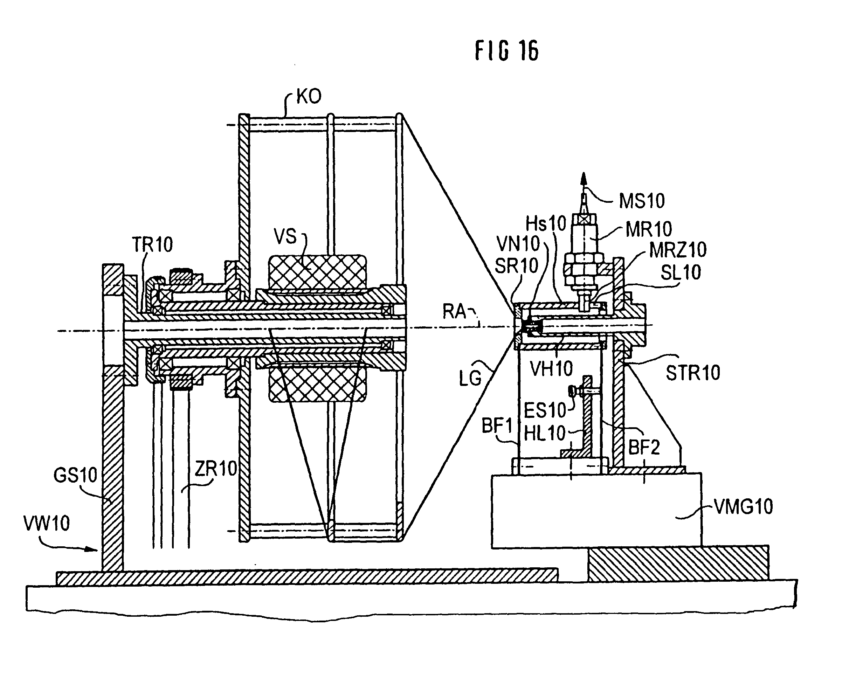

In Figur 16 ist als Anwendungsbeispiel der Erfindung ein Haltewendelwickler VW10 dargestellt, der langgestrecktes Gut LG, z.B. in Form eines Fadens, Bandes oder dergleichen auf eine hier nicht dargestellt Kabelseele aufbringt und dadurch die Adern oder Elemente dieser Kabelseele zusammenhält. Hierzu ist an einem feststehenden Gestell GS10 ein Tragrohr TR10 befestigt, auf dem außen drehbar eine Abwickelvorrichtung KO z.B. in Form eines Korbes oder Flyers gelagert ist. Im Inneren der Abwickelvorrichtung KO ist eine Vorratsspule VS (Kops) vorgesehen, von der das langgestreckte Gut LG abgezogen und einem feststehenden Verseilnippel VN10 zugeführt wird. Dieser ist baulich mit einem Verseil- und Meßgestell VMG10 verbunden, wobei die Achse der Wickeleinrichtung VW10 und des Verseilnippels VN10 fluchtend verlaufen. Der Verseilnippel VN10 ist über eine Hülse VH10 mit dem Verseil- und Meßgestell VMG10 verbunden. Das zu verseilende Gut verläuft (in hier nicht dargestellter Weise) von links nach rechts durch die Bohrung des Tragrohres TR10 hindurch und gelangt zum Verseilnippel VN10. Vor dem Haltewendelwickler VW10 sind entsprechende (hier nicht dargestellte) Verseileinrichtungen vorgesehen, insbesondere solche, die mit wechselnder Schlagrichtung (SZ-Verseilung) arbeiten, wie z.B. Rohrspeicher. Das langgestreckte Gut LG läuft zusammen mit dem längs der Verseilachse RA geführten Verseilelementen in den Verseilnippel VN110 ein.

Zur Bestimmung der Zugspannung des als Haltewendel aufgebrachten langgestreckten Gutes LG wird die Zugkraft-Meßeinrichtung ZM10 verwendet. Diese weist eine Hülse HS10 auf, an der einlaufseitig ein Ring bzw. eine Scheibe SR10 befestigt ist, durch welchen das langgestreckte Gut LG hindurchgeführt ist. Die Hülse HS10 ist durch zwei sich im wesentlichen parallel und in radialer Richtung erstreckende Blattfedern BF1 und BF2 gehalten, die an dem Meß- und Verseilgestell VMG10 befestigt sind. Dadurch ist bei einem entsprechenden Zug an dem langestreckten Gut LG eine Bewegung des Ringes SR10 und somit der Hülse HS10 in im wesentlichen axialer Richtung RA möglich. Grundsätzlich wäre auch die Verwendung nur einer Blattfeder in diesem Zusammenhang denkbar; dies hätte jedoch den Nachteil, daß dann eine gewisse Kippbewegung des Ringes SR10 eintreten könnte. Dagegen ist bei der Verwendung zweier Blattfedern BF1 und BF2, die im wesentlichen an den beiden Enden der Hülse HS10 befestigt sind, eine Verschiebung weitgehend nur in axialer Richtung RA möglich, je nach der Größe der Zugkraft, die von dem langgestreckten Gut LG ausgeübt wird.

Das langgestreckte Gut LG läuft auf die Oberfläche des nicht dargestellten Verseilbündels auf, tritt über den Verseilnippel VN10 in das Innere der Hülse VH10 ein und tritt am rechten Ende aus dem Verseil- und Meßgestell VMG10 aus. Die Hülse VH10 ist über eine Strebe STR10 an dem Bodenteil des Verseil- und Meßgestells VMG10 gehalten.

Der Abstand der beiden Blattfedern BF1 und BF2 wird zweckmäßig zwischen 1 cm und 10 cm gewählt. Die Blattfedern BF1 und BF2 bilden mit ihren vier jeweils endseitigen Einspannstellen (zwei unten, jeweils am Verseil- und Meßgestell VMG10, zwei oben, an der Hülse HS10), eine Art Viergelenksystem, wobei die entsprechenden Gelenkpunkte mit den Einspannstellen zusammenfallen.

Zur eigentlichen Meßwerterfassung ist eine kraftschlüssige Verbindung zwischen der Hülse HS10 und damit dem Ring SR10 einerseits und einem Meßsensor MR10 vorgesehen, wobei im vorliegenden Beispiel der Meßsensor MR10 mit einem radial verlaufenden Zapfen MRZ10 in einen in Richtung der Längsachse RA verlaufender Schlitz in der Hülse HS10 eingreift. Der Stift MRZ10 liegt kraftschlüssig am Boden dieses Schlitzes SL10 an der Hülse HS10 an, so daß eine axiale Zugkraft an dem langgestreckten Element LG auch eine auf den Zapfen MRZ10 wirkende Kraft ausübt, die von dem Meßsensor MR10 in ein Meßsignal MS10 umgeformt wien, das zur Regelung des Antriebs, z.B. des Kopses herangezogen werden kann, um die Zugspannung auf dem langgestreckten Gut LG innerhalb enger Grenzen zu stabilisieren.

Der Schlitz SL10 ist so ausgebildet, daß der Zapfen MRZ10 des Meßfühlers MR10 nur am Boden anliegt, d.h. die Schlitzbreite ist entsprechend größer gewählt als der Durchmesser des Zapfens. Dadurch können etwaige kleine Bewegungen in Umfangsrichtung der Hülse HS10 gesehen, keinen Beitrag zur Erzeugung des Meßsignals MS10 leisten.

Da die Blattfedern BF1 und BF2 zusammen mit dem Ring SR10 und der dazugehörigen Hülse HS10 in gewissem Umfang ein schwingfähiges Gebilde ergeben, ist auf dem Verseil- und Meßgestell VMG10 eine Haltelasche HL10 vorgesehen, an der eine mit einer entsprechenden Drehsicherung versehene Einstellschraube ES10 gehalten ist, die mit ihrem Ende an einer der Blattfedern, im vorliegenden Beispiel an der Blattfeder BF2 angreift und dieser eine bestimmte Vorspannung gibt. Diese Grund-Vorspannung wirkt sich natürlich auch auf den Zapfen MRZ10 des Meßfühlers MR10 aus und muß rechnerisch bei der Bildung des Meßsignals MS10 dadurch berücksichtigt werden, daß diese Grund-Vorspannung von dem vom Meßsensor MR10 erzeugten Meßsignal abgezogen wird. Es ist also im ungespannten Zustand des langgestreckten Gutes LG eine Art Eich- oder Kalibriervorgang durchzuführen, und das Meßsignal bei eingedrehter Schraube ES10 auf Null zu stellen.

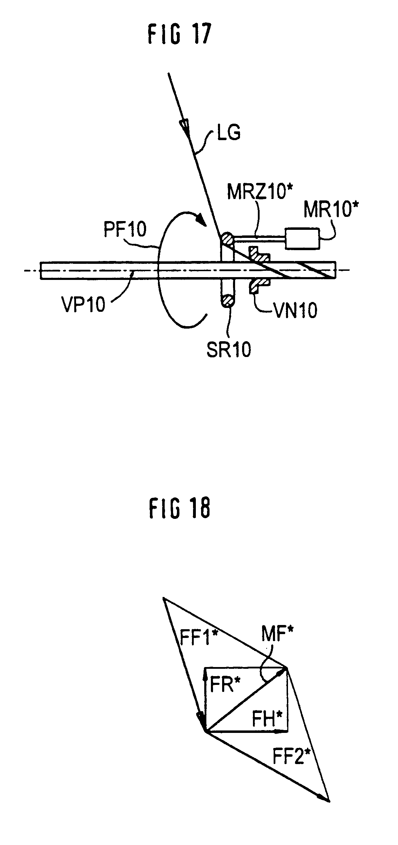

Figur 17 zeigt einen vergrößerten Teilausschnitt aus Figur 16, wobei nur der Verseilnippel VN10 und der zugehörige Ring SR10 gezeichnet sind, an dem das unter Zugspannung stehende langgestreckte Gut LG anliegt. Weiterhin ist ein als Verarbeitungsprodukt ein Bündel VP10 in Form einer Kabelseele oder dergleichen dargestellt, das durch das langgestreckte Gut LG zusammengehalten werden soll, wobei die Wickelrichtung durch den Pfeil PF10 angedeutet ist. Die übrige Ausgestaltung entspricht im wesentlichen der Anordnung des Verseil- und Meßgestells VMG10 nach Figur 16, wobei lediglich der Sensor MR10* mit seinem Zapfen MRZ10* um 90° gedreht angeordnet ist. Dies bedeutet, daß die Kraft, die das langgestreckte Gut LG auf den Meßring MR10 ausübt, axial an den Kraft-Meßsensor MR10* angreift. Während in Figur 16 ein axialer Angriff vorgesehen war. Welche Art der räumlichen Anordnung des Meßsensors MR10 oder MR10* gewählt wird, hängt von den jeweiligen baulichen Gegebenheiten und insbesondere auch von dem zur Verfügung stehenden Platz ab.

Figur 18 zeigt ein Kräfteparallelogramm, wie es im Bereich der Auflagefläche des langgestreckten Gutes LG nach Figur 18 an dem Meßring MR10 auftritt. Dabei bedeuten FF1* und FF2* die Spannungen an dem langgestreckten Gut LG und MF* die daraus resultierende Gesamtkraft, die auf den Meßring SR10 wirkt. Diese Gesamtkraft MF* läßt sich in zwei Teilkräfte FH* (in Richtung der Verseilachse RA verlaufend gesehen) und in eine Kraft FR* (in radialer Richtung zu RA verlaufend) zerlegen. Bei konstanten geometrischen Verhältnissen (festgelegt durch die Abwickelvorrichtung KO) ist die Kraft FH* somit proportional der Kraft, die als Zugkraft an dem langgestreckten Gut LG wirkt und gibt damit die mechanische Beanspruchung des langgestreckten Gutes LG wieder. Die Kraft FH* beeinflußt sowohl den Meßsensor MR10* nach Figur 17 als auch den Meßsensor MR10 nach Figur 1 und dient somit zur Erzeugung des Meßsignals MS10, mit dem die Zugbeanspruchung des langgestreckten Gutes LG genau auf dem gewünschten Wert gehalten werden kann.

In vielen Fällen ist es zweckmäßig bzw. erforderlich, an das Verarbeitungsprodukt nicht nur einmal sondern zweifach mit einem langgestreckten Gut zu umwickeln. Die Bewicklung selbst wird dabei im allgemeinen überkreuz aufgebracht, d.h. gegenläufig; es ist aber auch eine mehrfach gleichsinnige Bewicklung mit einem langgestreckten Gut möglich.

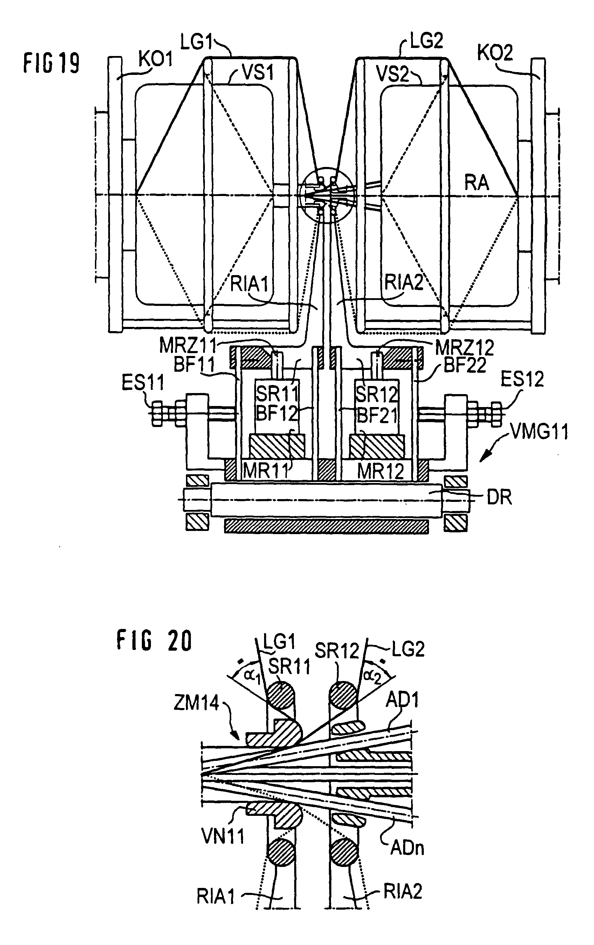

Figur 19 zeigt die Ausgestaltung einer derartigen Bewicklungseinrichtung mit den zugehörigen zwei Abwickelvorrichtungen KO1 und KO2 mit entsprechenden Vorratsspulen VS1 und VS2. Das langgestreckte Gut LG1 und LG2 wird jeweils in entgegengesetzter Richtung bezogen auf die Verseilachse RA abgezogen. Die Drehrichtung der beiden Abwicklvorrichtungen KO1 und KO2 wird, wenn eine gekreuzte Bewicklung gewünscht wird, gegenläufig gewählt. Das Verseil- und Meßgestell VMG11 ist gegenüber der Anordnung nach Figur 16 ebenfalls doppelt ausgebildet und weist zwei Meßsensoren MR11 und MR12 auf, die jeweils mit Zapfen MRZ11 und MRZ12 versehen sind, weiterhin sind zwei Blattfedern BF11 und BF12 (zum Meßsensor MR11 gehörig) sowie BF21 und BF22 (zum Meßsensor MR12 gehörig) vorgesehen. Auch zwei entsprechende Einstellschrauben ES11 (der Blattfeder BF11 zugeordnet) und ES12 (der Blattfeder BF22 zugeordnet) dienen der Einstellung der Grundvorspannung der Blattfedern und der Verhinderung von etwaigen Flatterbewegungen durch Erzeugung einer entsprechenden Federvorspannung. Im Gegensatz zu der in etwa koaxialen Anordnung der den Meßring SR10 tragenden Hülse HS10 in Figur 16 sind die mechanischen Verschiebeglieder in Figur 19 außerhalb der Abwickelvorrichtung und exzentrisch zu dieser angeordnet. Hierzu sind zwei Ringhalter RIA1 und RIA2 vorgesehen, die jeweils etwa L-förmig ausgebildet sind. Der jeweils außen liegende Schenkel ist mit den jeweils einem Meßfühler zugeordneten Blattfedern verbunden. An dem Ringhalter RIA1 sind die Blattfedern BF11 und BF12 angebracht, während an dem Ringhalter RIA2 die Blattfedern BF21 und BF22 angreifen. Die Zapfen MRZ11 und MRZ12 der beiden Meßsensoren MR11 und MR12 sind ebenfalls wie bei Figur 16 in Längsschlitzen SL11 und SL12 angeordnet und greifen dort bodenseitig am Ende der Schlitze kraftschlüssig an den Ringhaltern RIA1 bzw. RIA2 an. Der radial im wesentlichen nach innen, d.h. auf die Verseilachse RA gerichtete Schenkelteil trägt die ringförmigen Meßfühler wie näher anhand von Figur 20 erläutert wird.

Um das Umrüsten der gesamten Anordnung zu erleichtern, ist das Verseil- und Meßgestell VMG11 als Ganzes schwenkbar ausgebildet, wozu es an einer Drehachse DR, die im wesentlichen parallel zur Verseilachse RA verläuft, angeordnet ist. Dadurch läßt sich das gesamte Verseil- und Meßgestell VMG11 aus den fluchtend zu einander angeordneten Abwickelvorrichtungen KO1 und KO2 herausschwenken.

Die Verseilrichtung in Figur 19 ist von rechts nach links entlang der Achse RA verlaufend angenommen, also umgekehrt als bei der Figur 16.

In Figur 20 ist ein Verseilnippel VN11 vorgesehen, der an einem Halterohr VH11 (vergleiche Figur 19) gehalten und fest mit dem eigentlichen Verseilgestell verbunden ist. In diesen Verseilnippel VN11 läuft eine Anzahl von Adern AD1 bis ADn hinein, und diese werden durch den Verseilnippel VN11 gebündelt. Gleichzeitig laufen die als Haltewendel dienenden fadenförmigen Elemente LG1 und LG2 als langgestrecktes Gut ein und liegen dabei an den als Kraftsensoren dienenden Ringen SR11 bzw. SR12 an. Diese Ringe SR11 und SR12 sind mit den entsprechenden Ringhaltern RIA1 und RIA2 verbunden. Infolge der federnden Eigenschaften der Blattfedern BF11 bis BF22 ist somit eine Auslenkbarkeit der Ringe SR11 und SR12 gegeben und diese sind im wesentlichen axialer Richtung beweglich und zwar abhängig von der Größe der Zugkraft des als Haltewendel dienenden langgestreckten Gutes LG1 und LG2. Die Meßwerterfassung und Weiterleitung erfolgt analog zu der in Figur 16 beschriebenen Art und Weise, wobei lediglich die beiden Meßsignale, die von den Kraftsensoren MR11 und MR12 erzeugt werden, getrennt zur Steuerung der jeweiligen Antriebe der Vorratsspulen(Kops) dienen, d.h. der Meßsensor MR11 steuert die Kopsantrieb von KO1 und der Meßsensor MR12 die Kopsantrieb von KO2. Die Winkel α1 und α2, welche gebildet sind einerseits durch die Einlaufrichtung des jeweiligen langgestreckten Gutes LG1 bzw. LG2 und die Tangente im Scheitelpunkt des Anliegebereiches oder Auflagebereiches auf den jeweiligen Ringen SR11 bzw. SR12, sollten zweckmäßig etwa gleich groß gewählt werden, damit die beiden Kraftverteilungen (vergleiche Figur 18) für die beiden Meßfühler MR11 und MR12 ebenfalls etwa gleich groß sind und somit in beiden Fällen eine möglichst gleichmäßige und gleichförmige Regelung der Zugbeanspruchung des langgestreckten Gutes erreichbar ist.

## Patentansprüche

1. Wickeleinrichtung (WW) zum Bewickeln eines in axiale Abzugsrichtung (AR) durchlaufenden, langgestreckten Verarbeitungsprodukts (VP) der Kabeltechnik mit einem oder mehr als einem langgestreckten Gut (LG) unter einer vorgebbaren Zugspannung (F), die eine Vorratsspule (VS) für das jeweilige, langgestreckte Gut (LG), mindestens einen Meßfühler (FM) zur Bestimmung von Zugspannungen des jeweiligen, langgestreckten Gutes (LG) auf dessem Weg von der Vorratsspule (VS) zum Verarbeitungsprodukt (VP), sowie eine Auswerte-/Steuereinrichtung (SV) aufweist, die dem Meßfühler (FM) zugeordnet ist,
**dadurch gekennzeichnet,**
daß der Meßfühler (FM) derart als Meßring ausgebildet und bezüglich des in axiale Abzugsrichtung (AR) abgezogenen, zu bewickelnden Verarbeitungsprodukts (VP) angeordnet ist, daß er im Betrieb das Verarbeitungsprodukt (VP) und das langgestreckte Gut (LG) gemeinsam ringförmig so umgibt, daß das langgestreckte Gut (LG) am Innenrand dieses Meßrings ringsum entlangläuft und dabei das Verarbeitungsprodukt (VP) mit umläuft.

2. Wickeleinrichtung nach Anspruch 1,
**dadurch gekennzeichnet,**
daß der Vorratsspule (VS) eine Abwickelvorrichtung (KO) zum Abziehen des langgestreckten Gutes (LG) zugeordnet ist.

3. Wickeleinrichtung nach einem der vorhergehenden Ansprüche,
**dadurch gekennzeichnet,**
daß ein Verseilnippel (VN) für das Verarbeitungsprodukt (VP) vorgesehen ist.

4. Wickeleinrichtung nach Anspruch 3,
**dadurch gekennzeichnet,**
daß der Meßfühler (FM) in axialer Abzugsrichtung (AR) des Verarbeitungsprodukts (VP) betrachtet unmittelbar vor dem Verseilnippel (VN) angeordnet ist.

5. Wickeleinrichtung nach Anspruch 3,
**dadurch gekennzeichnet,**
daß der Meßfühler (SR1) außen auf dem Außenumfang des Verseilnippels (VN1) angebracht ist.

6. Wickeleinrichtung nach Anspruch 5,
**dadurch gekennzeichnet,**
daß der Meßfühler (SR1) den Verseilnippel (VN1) konzentrisch umgibt.

7. Wickeleinrichtung nach einem der Ansprüche 3 mit 6,
**dadurch gekennzeichnet,**
daß die Führungsöffnung (FO) des Meßrings (SR1) vor der Eingangsöffnung (EO) des Verseilnippels (VN1) sitzt.

8. Wickeleinrichtung nach Anspruch 3,
**dadurch gekennzeichnet,**
daß der Meßfühler im wesentlichen durch den Verseilnippel (VN) gebildet ist.

9. Wickeleinrichtung nach einem der Ansprüche 3 mit 8,
**dadurch gekennzeichnet,**
daß der Meßring (FM) einen Innendurchmesser aufweist, der gleich oder größer dem Innendurchmesser des nachfolgenden Verseilnippels (VN) gewählt ist.

10. Wickeleinrichtung nach einem der vorhergehenden Ansprüche,
**dadurch gekennzeichnet,**
daß der Innendurchmesser des Meßrings (FM) derart dimensioniert ist, daß er zwischen 1,5 und 5 mal größer als der Außendurchmesser des Verarbeitungsprodukts (VP) ist.

11. Wickeleinrichtung nach einem der vorhergehenden Ansprüche,
**dadurch gekennzeichnet,**
daß der Meßfühler (FM) eine im wesentlichen kreisrunde Führungsöffnung (FO) aufweist.

12. Wickeleinrichtung nach einem der vorhergehenden Ansprüche,
**dadurch gekennzeichnet,**
daß der Meßfühler (SR1) im wesentlichen kreiszylinderförmig ausgebildet ist.

13. Wickeleinrichtung nach einem der vorhergehenden Ansprüche,
**dadurch gekennzeichnet,**
daß der Meßfühler (SR1) derart angeordnet und ausgebildet ist, daß er das Verarbeitungsprodukt (VP) im wesentlichen konzentrisch umgibt.

14. Wickeleinrichtung nach einem der vorhergehenden Ansprüche,
**dadurch gekennzeichnet,**
daß der Meßfühler (SR1) entlang der axialen Abzugsrichtung (AR1) des Verarbeitungsprodukts (VP) verschiebbar gelagert ist.

15. Wickeleinrichtung nach einem der vorhergehenden Ansprüche,
**dadurch gekennzeichnet,**
daß der Meßfühler (SR10) in axialer Abzugsrichtung (AR) auslenkbar angeordnet ist.

16. Wickeleinrichtung nach einem der vorhergehenden Ansprüche,
**dadurch gekennzeichnet,**
daß dem Meßfühler (SR1) mindestens ein Kraftsensor (MR) zugeordnet ist.

17. Wickeleinrichtung nach einem der vorhergehenden Ansprüche,
**dadurch gekennzeichnet,**
daß der Meßfühler (SR1) derart als Meßring ausgebildet ist, daß Zugspannungen (F) des langgestreckten Gutes (LG) kleiner 100 cN, insbesondere von höchstens 50 cN, meßbar sind.

18. Wickeleinrichtung nach einem der vorhergehenden Ansprüche,
**dadurch gekennzeichnet,**
daß der Meßfühler (FM) als ein nicht federndes Element ausgebildet ist.

19. Wickeleinrichtung nach einem der Ansprüche 1 mit 17,
**dadurch gekennzeichnet,**
daß der Meßfühler (SR10) in axialer Richtung gesehen federnd gehalten ist.

20. Wickeleinrichtung nach Anspruch 19,
**dadurch gekennzeichnet,**
daß für die federnde Halterung des Meßfühlers (SR10) Mittel vorgesehen sind, die eine Federvorspannung (IS10) bewirken.

21. Wickeleinrichtung nach einem der Ansprüche 19 oder 20,
**dadurch gekennzeichnet,**
daß der Meßfühler (SR10) an mindestens einer Blattfeder (BF1, BF2) gehalten ist.

22. Wickeleinrichtung nach einem Anspruch 21,
**dadurch gekennzeichnet,**
daß zwei gleichartige und gleichlange Blattfedern (BF1, BF2) vorgesehen sind.

23. Wickeleinrichtung nach einem der vorhergehenden Ansprüche,
**dadurch gekennzeichnet,**
daß der Meßring (SR10) in einer Hülse (HS10) gehalten ist, die als ganzes axial auslenkbar ist.

24. Wickeleinrichtung nach einem der vorhergehenden Ansprüche,
**dadurch gekennzeichnet,**
daß dem jeweiligen Meßfühler (ZN3) mehr als ein langgestrecktes Gut (LG, LG*) zugeführt ist.

25. Wickeleinrichtung nach einem der Ansprüche 1 mit 23,
**dadurch gekennzeichnet,**
daß für jedes langgestreckte Gut (LG1, LG2) ein eigener Meßfühler (SR11, SR12) sowie ein eigener Meßsensor (MR11, MR12) vorgesehen ist.

26. Wickeleinrichtung nach einem der vorhergehenden Ansprüche,
**dadurch gekennzeichnet,**
daß das langgestreckte Verarbeitungsprodukt (VP) eine Kabelseele elektrischer und/oder optischer Übertragungselemente (VE1 mit VE4) ist.

27. Wickeleinrichtung nach einem der vorhergehenden Ansprüche,
**dadurch gekennzeichnet,**
daß das langgestreckte Gut (LG) ein faden- oder bandförmiges Material, insbesondere Fäden, Haltewendeln, Bänder oder Zwirne, umfaßt.

28. Wickeleinrichtung nach einem der vorhergehenden Ansprüche,
**dadurch gekennzeichnet,**
daß die Auswerte-/Steuereinrichtung (SV) mit der jeweiligen Antriebseinrichtung (MO1, MO2) und/oder Bremseinrichtung (HB) für die Vorratsspule (VS) und/oder die Abwickelvorrichtung (KO) zur Einstellung der Zugspannung (F) des langgestreckten Gutes (LG) rückgekoppelt ist.

29. Verfahren zum Bewickeln eines langgestreckten Verarbeitungsprodukts (VP) der Kabeltechnik mit einem oder mehr als einem langgestreckten Gut (LG) unter einer vorgebbaren Zugspannung (F) mit Hilfe einer Wickelvorrichtung nach einem der vorhergehenden Ansprüche,
**dadurch gekennzeichnet,**
daß das in axiale Abzugsrichtung (AR) abgezogene Verarbeitungsprodukt (VP) und das jeweilige langgestreckte Gut (LG) gemeinsam durch den Meßfühler (FM) hindurchgeführt werden, der sie als Meßring ringförmig umgibt,
und daß das Verarbeitungsprodukt (VP) vom langgestreckten Gut (LG) ringsum umlaufen wird, wobei das langgestreckte Gut (LG) am Innenrand dieses Meßrings entlangläuft.

30. Verfahren nach Anspruch 29,
**dadurch gekennzeichnet,**
daß das langgestreckte Gut (LG) in axialer Abzugsrichtung (AR) des Verarbeitungsprodukts (VP) betrachtet unmittelbar vor dem Verseilnippel (VN) dem Meßfühler (FM) zugeführt wird.

31. Verfahren nach einem der Ansprüch 29 oder 30,
**dadurch gekennzeichnet,**
daß der Meßfühler (SR1) durch die Zugspannung (F) des langgestreckten Gutes (LG) entlang der axialen Abzugsachse (AR1) des Verarbeitungsprodukts (VP) verschoben wird, und daß aus der axialen Verschiebung die Zugspannung (F) des langgestreckten Gutes (LG) gemessen und zur weiteren Auswertung bereitgestellt wird.

32. Verfahren nach einem der Ansprüche 29 mit 31,
**dadurch gekennzeichnet,**
daß das langgestreckte Gut (LG) von der Vorratsspule (VS) kommend durch den Meßfühler (z.B. FM) aus seiner Abzugsrichtung (LGI) abgelenkt wird.

33. Verfahren nach Anspruch 32,
**dadurch gekennzeichnet,**
daß das langgestreckte Gut (LG) um einen Winkel zwischen 2 und 60° auf seiner Abzugsrichtung (LGI) vor dem Meßfühler (FM) in seine Abzugsrichtung (LGO) nach dem Meßfühler (FM) umgelenkt wird.

## Claims

1. Winding device (WW) for wrapping an elongated product being processed (VP) in cable technology and passing through in the axial draw-off direction (AR) with one or more than one elongated product (LG) under a prescribable tensile stress (F), having a supply coil (VS) for the respective elongated product (LG), at least one measuring probe (FM) for determining tensile stresses of the respective elongated product (LG) on its path from the supply coil (VS) to the product being processed (VP), and an evaluation/control device (SV) which is assigned to the measuring probe (FM),
characterized in that
the measuring probe (FM) is designed as a measuring ring and arranged with respect to the product being processed (VP), which is drawn off in the axial draw-off direction (AR) and is to be wrapped, in such a way that in operation it jointly surrounds the product being processed (VP) and the elongated product (LG) in a ring shape such that the elongated product (LG) runs along all around on the inner rim of this measuring ring and, in so doing, runs around the product being processed (VP) as well.

2. Winding device according to Claim 1,
characterized in that
the supply coil (VS) is assigned an unwind device (KO) for drawing off the elongated product (LG).

3. Winding device according to one of the preceding claims,
characterized in that
a stranding nipple (VN) for the product being processed (VP) is provided.

4. Winding device according to Claim 3,
characterized in that
the measuring probe (FM), viewed in the axial draw-off direction (AR) of the product being processed (VP), is arranged immediately in front of the stranding nipple (VN).

5. Winding device according to Claim 3,
characterized in that
the measuring probe (SR1) is fitted on the outside on the outer circumference of the stranding nipple (VN1).

6. Winding device according to Claim 5,
characterized in that
the measuring probe (SR1) surrounds the stranding nipple (VN1) concentrically.

7. Winding device according to one of Claims 3 to 6,
characterized in that
the guide opening (FO) of the measuring ring (SR1) is situated in front of the entry opening (EO) of the stranding nipple (VN1).

8. Winding device according to Claim 3,
characterized in that
the measuring probe is essentially formed by the stranding nipple (VN).

9. Winding device according to one of Claims 3 to 8,
characterized in that
the measuring ring (FM) has an internal diameter which is selected to be equal to or larger than the internal diameter of the subsequent stranding nipple (VN).

10. Winding device according to one of the preceding claims,
characterized in that
the internal diameter of the measuring ring (FM) is dimensioned in such a way that it is between 1.5 and 5 times larger than the external diameter of the product being processed (VP).

11. Winding device according to one of the preceding claims,
characterized in that
the measuring probe (FM) has an essentially circular guide opening (FO).

12. Winding device according to one of the preceding claims,
characterized in that
the measuring probe (SR1) is of essentially circularly cylindrical design.

13. Winding device according to one of the preceding claims,
characterized in that
the measuring probe (SR1) is arranged and designed in such a way that it surrounds the product being processed (VP) essentially concentrically.

14. Winding device according to one of the preceding claims,
characterized in that
the measuring probe (SR1) is mounted so as to be displaceable along the axial draw-off direction (AR1) of the product being processed (VP).

15. Winding device according to one of the preceding claims,
characterized in that
the measuring probe (SR10) is arranged so as to be deflectable in the axial draw-off direction (AR).

16. Winding device according to one of the preceding claims,
characterized in that
the measuring probe (SR1) is assigned at least one force sensor (MR).

17. Winding device according to one of the preceding claims,
characterized in that the measuring probe (SR1) is designed as a measuring ring in such a way that it is possible to measure tensile stresses (F) in the elongated product (LG) which are less than 100 cN, in particular a maximum of 50 cN.

18. Winding device according to one of the preceding claims,
characterized in that
the measuring probe (FM) is designed as a non-resilient element.

19. Winding device according to one of Claims 1 to 17,
characterized in that
the measuring probe (SR10) is held resiliently, viewed in the axial direction.

20. Winding device according to Claim 19,
characterized in that
means which effect a spring prestress (IS10) are provided for the resilient mounting of the measuring probe (SR10).

21. Winding device according to one of Claims 19 or 20,
characterized in that
the measuring probe (SR10) is held on at least one leaf spring (BF1, BF2).

22. Winding device according to Claim 21,
characterized in that
two leaf springs (BF1, BF2) of identical type and identical length are provided.

23. Winding device according to one of the preceding claims,
characterized in that
the measuring ring (SR10) is held in a sleeve (HS10) which can be deflected axially as a whole.

24. Winding device according to one of the preceding claims,
characterized in that
more than one elongated product (LG, LG*) is fed to the respective measuring probe (ZN3).

25. Winding device according to one of Claims 1 to 23,
characterized in that
a dedicated measuring probe (SR11, SR12) and a dedicated measuring probe (MR11, MR12) is provided for each elongated product (LG1, LG2).

26. Winding device according to one of the preceding claims,
characterized in that
the elongated product being processed (VP) is a cable core of electrical and/or optical transmission elements (VE1 to VE4).

27. Winding device according to one of the preceding claims,
characterized in that
the elongated product (LG) comprises a thread-like or ribbon-like material, in particular threads, retaining spirals, ribbons or yarns.

28. Winding device according to one of the preceding claims,
characterized in that
the evaluation/control device (SV) is coupled back to the respective drive device (MO1, MO2) and/or braking device (HB) for the supply coil (VS) and/or the unwind device (KO) for setting the tensile stress (F) of the elongated product (LG).

29. Method for wrapping an elongated product being processed (VP) in cable technology with one or more than one elongated product (LG) under a prescribable tensile stress (F) with the aid of a winding device according to one of the preceding claims,
characterized in that
the product being processed (VP), which is drawn off in the axial draw-off direction (AR), and the respective elongated product (LG) are jointly guided through the measuring probe (FM), which surrounds them in a ring shape as a measuring ring, and in that the elongated product (LG) runs all around the product being processed (VP), the elongated product (LG) running along on the inner rim of this measuring ring.

30. Method according to Claim 29,
characterized in that
the elongated product (LG), viewed in the axial draw-off direction (AR) of the product being processed (VP), is fed to the measuring probe (FM) directly in front of the stranding nipple (VN).

31. Method according to either Claim 29 or Claim 30,
characterized in that
the measuring probe (SR1) is displaced along the axial draw-off axis (AR1) of the product being processed (VP) as a result of the tensile stress (F) of the elongated product (LG), and in that the tensile stress (F) of the elongated product (LG) is measured from the axial displacement and is provided for further evaluation.

32. Method according to one of Claims 29 to 31,
characterized in that
the elongated product (LG) coming from the supply coil (VS) is deflected out of its draw-off direction (LGI) by the measuring probe (eg. FM).

33. Method according to Claim 32,
characterized in that
the elongated product (LG) is deflected through an angle between 2 and 60° to its draw-off direction (LGI) before the measuring probe (FM) into its draw-off direction (LGO) after the measuring probe (FM).

## Revendications

1. Enveloppeuse (WW) pour envelopper un produit (VP) préparé oblong du domaine du câblage, circulant dans une direction (AR) axiale de défilement, d'un ou plus d'un produit (LG) oblong sous une contrainte (F) de traction pouvant être prescrite, comportant une bobine (VS) d'alimentation pour le produit (LG) oblong respectif, au moins une sonde (FM) pour déterminer les contraintes de traction du produit (LG) oblong respectif sur son trajet de la bobine (VS) d'alimentation au produit (VP) préparé, ainsi qu'un dispositif (SV) d'interprétation et de commande qui est associé à la sonde (FM),
**caractérisée** en ce que la sonde (FM) est réalisée sous forme de bague de mesure et disposée, par rapport au produit (VP) préparé à envelopper défilant dans la direction (AR) axiale de défilement, de telle sorte qu'en service, elle entoure annulairement conjointement le produit (VP) préparé et le produit (LG) oblong de telle façon que le produit (LG) oblong circule tout autour du bord intérieur de cette bague de mesure, en s'enroulant alors en même temps autour du produit (VP) préparé.

2. Enveloppeuse suivant la revendication 1, **caractérisée** en ce qu'une dérouleuse (KO) est associée à la bobine (VS) d'alimentation pour dérouler le produit (LG) oblong.

3. Enveloppeuse suivant l'une des revendications précédentes,
**caractérisée** en ce qu'il est prévu un manchon (VN) de câblage pour le produit (VP) préparé.

4. Enveloppeuse suivant la revendication 3, **caractérisée** en ce que la sonde (FM) est disposée, en vue dans la direction (AR) axiale de défilement du produit (VP) préparé, juste avant le manchon (VN) de câblage.

5. Enveloppeuse suivant la revendication 3, **caractérisée** en ce que la sonde (SR1) est installée extérieurement sur la périphérie extérieure du manchon (VN1) de câblage.

6. Enveloppeuse suivant la revendication 5, **caractérisée** en ce que la sonde (SR1) entoure concentriquement le manchon (VN1) de câblage.

7. Enveloppeuse suivant l'une des revendications 3 à 6,
**caractérisée** en ce que l'ouverture (FO) de guidage de la sonde (SR1) est montée devant l'ouverture (EO) d'entrée du manchon (VN1) de câblage.

8. Enveloppeuse suivant la revendication 3, **caractérisée** en ce que la sonde est essentiellement formée par le manchon (VN) de câblage.

9. Enveloppeuse suivant l'une des revendications 3 à 8,
**caractérisée** en ce que la bague (FM) de mesure possède un diamètre intérieur qui est choisi égal ou supérieur au diamètre intérieur du manchon (VN) de câblage consécutif.

10. Enveloppeuse suivant l'une des revendications précédentes,
**caractérisée** en ce que le diamètre intérieur de la bague (FM) de mesure est calculé de façon à être entre 1,5 et 5 fois supérieur au diamètre extérieur du produit (VP) préparé.

11. Enveloppeuse suivant l'une des revendications précédentes,
**caractérisée** en ce que la sonde (FM) comporte une ouverture (FO) de guidage essentiellement circulaire.

12. Enveloppeuse suivant l'une des revendications précédentes,
**caractérisée** en ce que la sonde (SR1) est réalisée de forme essentiellement cylindrique circulaire.

13. Enveloppeuse suivant l'une des revendications précédentes,
**caractérisée** en ce que la sonde (SR1) est disposée et conçue de telle sorte qu'elle entoure essentiellement concentriquement le produit (VP) préparé.

14. Enveloppeuse suivant l'une des revendications précédentes,
**caractérisée** en ce que la sonde (SR1) est montée à déplacement le long de la direction (AR1) axiale de défilement du produit (VP) préparé.

15. Enveloppeuse suivant l'une des revendications précédentes,
**caractérisée** en ce que la sonde (SR10) est montée à déplacement dans la direction (AR) axiale de défilement.

16. Enveloppeuse suivant l'une des revendications précédentes,
**caractérisée** en ce qu'au moins un capteur (MR) de force est associé à la sonde (SR1).

17. Enveloppeuse suivant l'une des revendications précédentes,
**caractérisée** en ce que la sonde (SR1) est réalisée sous forme de bague de mesure de manière à pouvoir mesurer des contraintes (F) de traction du produit (LG) oblong inférieures à 100 cN, notamment d'au plus 50 cN.

18. Enveloppeuse suivant l'une des revendications précédentes,
**caractérisée** en ce que la sonde (FM) est réalisée sous forme d'élément non élastique.

19. Enveloppeuse suivant l'une des revendications 1 à 17,
**caractérisée** en ce que la sonde (SR10) est maintenue à élasticité en direction axiale.

20. Enveloppeuse suivant la revendication 19, **caractérisée** en ce qu'il est prévu, pour le maintien élastique de la sonde (SR10), des moyens qui produisent une précontrainte (IS10) élastique.

21. Enveloppeuse suivant la revendication 19 ou 20,
**caractérisée** en ce que la sonde (SR10) est maintenue par au moins un ressort (BF1, BF2) à lame.

22. Enveloppeuse suivant la revendication 21, **caractérisée** en ce qu'il est prévu deux ressorts (BF1, BF2) à lame de même type et de même longueur.

23. Enveloppeuse suivant l'une des revendications précédentes,
**caractérisée** en ce que la sonde (SR10) est maintenue dans un manchon (HS10) qui est globalement axialement mobile.

24. Enveloppeuse suivant l'une des revendications précédentes,
**caractérisée** en ce que plus d'un produit (LG, LG*) oblong est apporté à la sonde (ZM3) respective.

25. Enveloppeuse suivant l'une des revendications 1 à 23,
**caractérisée** en ce qu'une propre sonde (SR11, SR12) et un propre capteur (MR11, MR12) sont prévus pour chaque produit (LG1, LG2) oblong.

26. Enveloppeuse suivant l'une des revendications précédentes,
**caractérisée** en ce que le produit (VP) préparé oblong est une âme de câble pourvue d'éléments (VE1 à VE4) de transmission électrique et/ou optique.

27. Enveloppeuse suivant l'une des revendications précédentes,
**caractérisée** en ce que le produit (LG) oblong est un matériau en forme de bande ou de fil textile, notamment des fils, spirales de maintien, bandes ou fils retors.

28. Enveloppeuse suivant l'une des revendications précédentes,
**caractérisée** en ce que le dispositif (SV) d'interprétation et de commande est, afin de régler la contrainte (F) de traction du produit (LG) oblong, couplé en retour au dispositif respectif d'entraînement (MO1, MO2) et/ou de freinage (HB) pour la bobine (VS) d'alimentation et/ou la dérouleuse (KO).

29. Procédé pour envelopper un produit (VP) préparé oblong du domaine du câblage d'un ou plus d'un produit (LG) oblong sous une contrainte (F) de traction prescriptible, à l'aide d'une enveloppeuse suivant l'une des revendications précédentes,
**caractérisé** en ce qu'on fait passer conjointement le produit (VP) préparé défilant dans la direction (AR) axiale de défilement et le produit (LG) oblong respectif dans la sonde (FM), qui les entoure annulairement sous forme de bague de mesure,
et en ce que le produit (LG) oblong s'enroule tout autour du produit (VP) préparé, le produit (LG) oblong circulant alors le long du bord intérieur de cette bague de mesure.

30. Procédé suivant la revendication 29, **caractérisé** en ce que le produit (LG) oblong est apporté à la sonde (FM), en vue dans la direction (AR) axiale de défilement du produit (VP) préparé, juste avant le manchon (VN) de câblage.

31. Procédé suivant la revendication 29 ou 30, **caractérisé** en ce que la sonde (SR1) est déplacée par la contrainte (F) de traction du produit (LG) oblong le long de l'axe (AR1) de défilement axial du produit (VP) préparé, et en ce que la contrainte (F) de traction du produit (LG) oblong est mesurée à partir du déplacement axial, et mise à disposition pour la suite de l'interprétation.

32. Procédé suivant l'une des revendications 29 à 31, **caractérisé** en ce que le produit (LG) oblong provenant de la bobine (VS) d'alimentation est dévié de sa direction (LGI) de déroulement par la sonde (FM par exemple).

33. Procédé suivant la revendication 32, **caractérisé** en ce que le produit (LG) oblong est dévié d'un angle compris entre 2 et 60° entre sa direction (LGI) de dèroulement avant la sonde (FM) et sa direction (LGO) de déroulement après la sonde (FM).
